# EUROPEAN PATENT APPLICATION

(11) **EP 2 113 302 A1**
(43) Date of publication of application: **04.11.2009**
(21) Application number: 05739300.1
(22) Date of filing: 13.05.2005
(51) Int. Cl.: B01J 20/20, C01B 31/02

(54) **FINE CARBON DISPERSION**

(30) Priority: 13.05.2004 JP 2004144060; 24.03.2005 JP 2005122903
(71) Applicant: National University Corporation Hokkaido University, Sapporo-shi, Hokkaido 060-0808 (JP)
(72) Inventor: FUGETSU, Bunshi, Sapporo-shi, Hokkaido 065-0027 (JP)
(74) Representative: Betten & Resch
(86) International application number: PCT/JP2005/008795
(87) International publication number: WO 2005/110594

(57) **Abstract**

Disclosed is a means for enabling fine carbons, which include from nano-sized to micro-sized carbons, to disperse uniformly. Specifically disclosed is a fine carbon dispersion which is produced by using a liquid fine carbon dispersion medium containing fine carbons including from nano-sized to micro-sized carbons and a dispersing agent for fine carbons.

## Description

### TECHNICAL FIELD

The present invention relates to fine carbon dispersion objects as composite materials in which nano- to micro-sized fine carbons (for example, carbon nanotubes) are uniformly dispersed (for example, gels and dried gels thereof, fibers, films and moldings), fine carbon dispersion objects as mediator materials for dispersing the fine carbons in products during production of the products as well as processes for production and uses thereof.

### BACKGROUND ART

Nano- to micro-sized carbons have recently been drawing attentions in a variety of fields. In particular, nanocarbon is a new material, represented by carbon nanotubes (CNT), which draws attentions in various fields of energy, electronics, chemistry, pharmaceuticals, optics, materials, mechanics and so on. The CNT, one of the materials representative of nanotechnology, is a new material which is lightweight and strong, with researches underway in applications in materials for electronic emitters for displays, hydrogen absorption materials, probes for atomic force microscopes and so on. The CNT include mono- and multi-layered types and cup-stack types. The mono- and multi-layered types are needle-like carbon molecules having a diameter in the order of nanometers and have a structure of graphene rolled into a cylinder. Those having a multi-layer structure composed of concentrically placed graphene cylinders are called multi-walled carbon nanotubes (MWCNT), and are utilized for emitters for FED, ultrahigh-strength materials, composite materials and so on. On the other hand, those consisting of a single layer of graphene cylinder are called single-walled carbon nanotubes (SWCNT) and utilized in applications for fuel cells, lithium secondary batteries and so on. In particular, development of composite materials using carbon nanotubes as a filler has actively been conducted.

Incidentally, researches have been focused on the fields of electronic materials such as electron emitting elements and high-strength materials since the CNT have excellent electrical conductivity and mechanical strength. For example, the technique of Patent Reference 1 relates to a process for producing CNT thin films for obtaining electron emitting elements. According to this process, dispersed particles are deposited on electrode particles to be rendered film-like. In other words, in this technique, in order to guarantee high electron-emitting capability, CNT are coagulated at a high density. In addition, the technique of Patent Reference 2 is a thermoplastic resin composition that contains a thermoplastic resin, a foaming agent, a crosslinking agent and CNT, to be used for thermal insulators, etc. The composition containing CNT is melted and kneaded for forming before being subjected to crosslinking and foaming reactions to form a crosslinked thermoplastic resin in which the CNT have been dispersed.
Patent Reference 1: Japanese Unexamined Patent Publication No. 2001-48511
Patent Reference 2: Japanese Unexamined Patent Publication No. 2004-75707

### DISCLOSURE OF THE INVENTION

### PROBLEMS TO BE SOLVED BY THE INVENTION

In producing composite materials as described above, the composite materials are obtained in general through mixture with resins in the prior art. According to this procedure, however, when carbon nanotubes to be mixed are highly entwined in formation, clusters of the carbon nanotubes will remain, preventing uniform dispersion from being guaranteed. Specifically, in such CNT materials as used for electronic materials, since CNT are coagulated with each other at a high density, it is hard to say that they sufficiently possess properties such as air permeability, transmissivity, adsorptivity, and the like. Also, for such CNT materials as high-strength materials, although they possess air permeability with respect to pores as a result of foaming, the thermoplastic resins have little gap between their crosslinked structures, markedly impairing internal air permeability. When these materials are used as adsorbents, therefore, absorbing power of the CNT present on the surface or on the inside may not sufficiently be exhibited. As such, the present invention aims to provide means for guaranteeing uniform dispersibility of carbon nanotubes in composite materials.

### MEANS FOR SOLVING THE PROBLEMS

As a result of conducting a keen study in recognition of the problems described above, the inventors have found that it is possible to solve the problems by using fine carbon dispersion liquid during production of composite materials, to successfully complete the invention. Concomitantly during such study, the inventors have also found novel dispersion liquid applicable to other uses. Therefore, the present invention is as follows.

The invention (1) is a fine carbon dispersion object produced by using a fine carbon-dispersed liquid medium which contains nano- to micro-sized fine carbons and a dispersant for the fine carbons.

Herein, "nano- to micro-sized fine carbons" refers to carbons having a diameter on the order of from 10⁻⁶ to 10⁻⁹ m and a length on the order of from 10⁻⁴ to 10⁻⁹ m (preferably from 10⁻⁶ to 10⁻⁹ m) and are, for example, nanocarbons. "Nanocarbons" refers to carbons on the order of 10⁻⁹ m, preferable examples of which include carbon nanotubes (single-, double-and multi-walled types and cup-stack types), carbon nanofibers, carbon nanohorns, graphite or fullerenes. Here, "nano- to micro-sized fine carbons" means that they include at least one carbon falling under the nano- to micro-sized fine carbons, but do not mean they include carbons of all sizes ranging from the nano- to micro-sizes or do not means they exclude carbons other than the nano- to micro-sized carbons. Further, "carbon nanotubes" include those of single-and multi-layer (two or more layer) types as well as those having disturbed graphite layers. Since dispersion becomes hard to attain with an increased number of layers, significance of the present invention will be greater with more layers. This particular term applies not only to the invention (1) but also to all other inventions to be subsequently referred to, unless otherwise specified. Similarly, each term to be mentioned in description of the inventions to be subsequently referred to also applies to all other inventions, unless otherwise specified.

"Dispersant" refers to a reagent for dispersing fine carbons in a liquid medium. It should preferably be one capable of dispersing fine carbons in such a manner that it will not modify the surfaces of the fine carbons in order not to impair the properties of the fine carbons. Here, "dispersing" means dispersing in a broad sense which encompasses suspension and dissolution. Mentioned for example are modes where all the fine carbons are dissolved, all of them are suspended, part of them is dissolved (or suspended or otherwise present) and part of them is suspended (or suspended or otherwise present). Macroscopically, it also refers to a mode where fine carbons are dispersed and floating in a liquid, as if they were uniform in appearance. Most preferably, it refers to a mode, even if it is left to stand for one day or longer, where the fine carbon exist up to an upper part of the liquid portion.

"Fine carbon dispersion object(s)" refers to an object in which fine carbons are dispersed. Here, the fine carbons should preferably be dispersed in a uniform manner. For example, composite materials in which carbon nanotubes are dispersed in a uniform manner (for example, fibers, films and moldings) may be mentioned. Also "dispersed in a uniform manner" means that physical properties of resultant composite materials do not show any variation between different locations (for example, on the order of ± 20%). Specifically, any degree by which uniform dispersion is visually discernible in comparison to the conventional clusters as observed by electron microscopy falls under the definition of "dispersed in a uniform manner" according to the present invention.

The "liquid medium" of "the carbon-dispersed liquid medium" is not particularly specified as long as it is capable of dispersing carbons in combination with a dispersant, examples of which include aqueous solvents, such as water, alcohols and any combinations thereof and non-aqueous solvents (oil-based solvents), such as silicone oils, carbon tetrachloride, chloroform, toluene and any combinations thereof.

The invention (2) is the fine carbon dispersion object according to the invention (1) which is of the surface dispersion type wherein the fine carbons are dispersed on the surface of an object or of the internal dispersion type wherein the fine carbons are dispersed on the inside of an object.

The invention (3) is the fine carbon dispersion object according to the invention (2) wherein the fine carbon dispersion of the internal dispersion type is a gel or a dried product thereof obtained by gelling the fine carbon-dispersed liquid medium or a dried product thereof.

The "fine carbon liquid medium" according to the present invention must be gellable. Here, "gellable" means that the carbon-dispersed liquid medium includes a gelling material having a crosslinkable group capable of being crosslinked by some means. Preferably, the dispersant is the gelling material.

"Dried product thereof' refers to a dried product of "the carbon-dispersed liquid medium" and the degree of dryness is not particularly specified. In this condition, it is understood that the carbons are present in a gelling material (for example, a dispersant, such as a surface active agent) with a high uniformity while maintaining very small particle diameters.

"Gelling a dried product thereof" refers to gelling a dried product thereof after rendering by any means a product into a wet form in which a liquid medium is present. For example, application of a liquid medium containing a gelling agent to a dried product thereof, application of a liquid medium to a dried product thereof followed by crosslinking with light or radiation and the like may be mentioned.

"Gel obtained" is to be understood as one in which carbons are incorporated in the gel with a high uniformity while maintaining very small diameters. Here, "incorporated" is a concept for the case in which the carbons are included in a network structure of a gel and optionally, the carbons in a liquid medium or the carbons in a dried form are enclosed by a gel film. For example, in the case of a bead-like or fiber-like gel enclosing a liquid medium, a mode in which the carbons are present only in the network of the gel and a mode in which the carbons are present in the network of the gel and also dissolved and dispersed in the liquid medium inside may be mentioned. Also in the case of a film-like, plate-like or bulk-like gel, a mode in which nanocarbons are present in the gel network may be mentioned. Since it is "a gel obtained" instead of "the gel which as obtained," such a gel is not limited to the gel obtained exclusively by this process, as long as they are per se identical.

Here, "gel" refers to a three dimensional structure formed by macromolecules being chemically or physically crosslinked or by monomers simultaneously being polymerized and crosslinked, in which a solvent is retained in the structure, the "solvent" meaning a liquid contained in the network structure for swelling the network structure. It may therefore be read simply as "liquid." The solvents are not particularly specified and selected in relationship with particular applications. Therefore, it may not necessarily be identical to "the liquid medium" in "the gellable carbon-dispersed liquid medium" as a raw material for the gel, and a new solvent will be used as a solvent for "a gel obtained" when solvent exchange is made after gelling the raw material. Specific examples include aqueous solvents, such as water, alcohols, and any combinations thereof and oil-based solvents, such as silicone oil, carbon tetrachloride, chloroform, toluene and any combinations thereof. For example, when the liquid medium is water, application include uses in water purifiers where biological safety is required and separatory resins for chromatography using aqueous solution as an eluent.

The invention (4) is the fine carbon dispersion object according to the invention (3) which adopts a double structure made of inner and outer layers, wherein the inner layer is the carbon-dispersed liquid medium and the outer layer is a gelled product of the fine carbon-dispersed liquid medium.

Embodiments wherein additional gels or polymers are coated further outside the outer layer are also within the range of the present invention as long as they adopt a double structure made of inner and outer layers.

Here, considering the embodiments of gels or dried gels according to the inventions (2) to (4) as Group A, preferred inventions of Group A include the following.

A preferred embodiment (A-1) is a gel obtained by gelling a gellable carbon-dispersed liquid medium or a dried product thereof, which contains nano- to micro-sized carbons and a dispersant for the carbons.

A preferred embodiment (A-2) is the gel according to the preferred embodiment (1) wherein the carbon-dispersed liquid medium is a solution or suspension of the carbons. Here, "or" of "solution or suspension of the carbons" means that one of them does not exclude the other as long as at least one of them is essential. Unless otherwise specified, the same will apply throughout the specification. In other words, for example, modes where all the carbons are dissolved, all of them are suspended, part of them is dissolved (or suspended or otherwise present) and part of them is suspended (or dissolved or otherwise present) may be mentioned. A solution form is preferable because it has smaller particle diameters and high uniformity.

A preferred embodiment (A-3) is the gel according to the preferred embodiment (A-1) or (A-2) which has been gelled by crosslinking of the dispersant.

A preferred embodiment (A-4) is the gel according to any one of the preferred embodiments (A-1) to (A-3) wherein the dispersant is a surface active agent. Specific examples of surface active agents will be described in detail in BEST MODE FOR CARRYING OUT THE INVENTION.

A preferred embodiment (A-5) is the gel according to any one of the preferred embodiment (A-1) to (A-4) wherein the carbons are carbon nanotubes (single-, double- and multi-walled types and cup-stack types), carbon nanofibers, carbon nanohorns, graphite, fullerenes, carbon microhorns or microcarbon filters. Here, "graphite" in the preferred embodiment is particles ground to a diameter equal to or less than 10⁻⁶ m.

A preferred embodiment (A-6) is the gel according to any one of the preferred embodiments (A-1) to (A-5) which is bead-like, fiber-like, film-like, plate-like or bulk-like.

Here, "bead-like" may also be referred to as "vesicular," which means approximately globular, whose particle diameters are not particularly specified, with preferable ranges varying according to applications and the like. Also, "fiber-like" means string-like, whose lengths and diameters are not particularly specified and are determined according to applications. For example, those as thin as threads and those as thick as toad spawns are all included as "fiber-like." Next, also with respect to "film-like" and "plate-like," surface areas and profiles are not particularly specified and are determined according to applications. With respect also to "bulk-like," volumes and shapes are not particularly specified and are determined according to applications. With respect to other preferred embodiments to be referred to below, for example, a preferred embodiment (A-7), for example, some bead-like or fiber-like gels adopt a double structure made of inner and outer layers; however, this preferred embodiment (A-6) is not limited thereto and includes embodiments in which the entirety is gelled, not having such a double structure.

A preferred embodiment (A-7) is the gel according to the preferred embodiment (A-6) wherein the bead-like or fiber-like gel adopts a double structure made of inner and outer layers, wherein the inner layer is the carbon-dispersed liquid medium and the outer layer is a gelled product of the fine carbon-dispersed liquid medium.

A preferred embodiment (A-8) is the gel according to the preferred embodiment (A-7) wherein the bead-like or fiber-like gel is obtained by adding the carbon-dispersed liquid medium dropwise or flow-wise to a liquid medium containing a gelling agent.

Here, "gelling agent" is not particularly specified as long as it is capable of crosslinking a gelling material in the carbon-dispersed liquid medium (for example, a dispersant). The "liquid medium" in "the liquid medium containing a gelling agent" is not particularly specified as long as it is capable of dispersing (for example, dissolving or suspending) the gelling agent, example of which include that identical to "the liquid medium" in "the nanocarbon-dispersed liquid medium" as mentioned for the preferred embodiment (A-1). Since the intention is to gel a gelling material (for example, a dispersant) in a nanocarbon-dispersed liquid medium with a gelling agent, at least one of "the liquid medium" in "the liquid medium containing a gelling agent" and "the liquid medium" in "the nanocarbon-dispersed liquid medium" should preferably have an ability to disperse both the gelling material and the gelling agent.

Also, "adding dropwise" refers to applying "the carbon-dispersed liquid medium" intermittently to "the liquid medium containing a gelling agent." On the other hand, "adding flow-wise" refers to applying "the carbon-dispersed liquid medium" continuously in time to "the liquid medium containing a gelling agent." For either of them, in addition to free fall, acceleration may be applied to make it fall onto "the liquid medium containing a gelling agent" (for example, forcing it to fall with an injector or the like) or deceleration may be applied to let it fall onto "the liquid medium containing a gelling agent" (for example, let it fall slowly onto "the liquid medium containing a gelling agent" with the use of a tube or a guide member). Directions of application should preferably be downward, but other directions may also be used.

A preferred embodiment (A-9) is the gel according to the preferred embodiment (A-6) wherein the film-like, plate-like or bulk-like gel is obtained by crosslinking the carbon-dispersed liquid medium that is coated into a film or placed in a mold or by applying the liquid medium containing a gelling agent to a dried product thereof.

Here, the crosslinking in the former means both crosslinking with the use of a gelling agent (applying a liquid containing a gelling agent or a solid-state gelling agent) and crosslinking without the use of a gelling agent (for example, radiation crosslinking), the latter meaning crosslinking with the use of a gelling agent in the form of a liquid containing a gelling agent.

Also, the "mold" may be of an open type or a closed type, size and shape of which are not particularly specified and are determined in relationship with applications. "Application" means any concepts in which carbon-dispersed liquid medium or a dried product thereof is combined with a gelling agent or a liquid medium containing a gelling agent, including adding or being added and coating or being coated.

A preferred embodiment (A-10) is a dried gel which is obtained by drying any one of the gels according to the preferred embodiments (A-1) to (A-9).

Here, "dried gel" is not particularly specified as long as it is a gel dried of an original gel that contained a solvent, with the degree of dryness (content of the solvent in the gel) not particularly specified and are determined in relationship with applications. For example, a gel deprived of X% of a solvent in the original gel and a fully dried gel (resin) deprived of 100% of a solvent may be mentioned.

The invention (5) is the fine carbon dispersion object according to the invention (2) wherein the fine carbon dispersion object of the internal dispersion type is produced by dispersing raw material monomers in the fine carbon-dispersed liquid medium, followed by polymerizing the raw material monomers and removing the liquid medium. Here, "dispersing monomers" also includes dissolving, suspending and emulsifying them.

The invention (6) is the fine carbon dispersion object according to the invention (2) wherein the fine carbon dispersion object of the internal dispersion type is produced by dispersing a raw material polymer in the fine carbon-dispersed liquid medium, followed by removing the liquid medium. Here, "dispersing a polymer" also includes dissolving, suspending and emulsifying it.

The invention (7) is the fine carbon dispersion object according to the invention (2) wherein the fine carbon dispersion object of the surface dispersion type is produced by immersing a raw material in the fine carbon-dispersed liquid medium and optionally raveling out the raw material, followed by removing the liquid medium. As a procedure for "raveling out" ultrasonification may be mentioned for example.

The invention (8) is the fine carbon dispersion object according to the invention (1) or (2) wherein the object composing the fine carbon dispersion object is made of a material capable of liberating, under predetermined conditions, the fine carbons dispersed on the surface and/or on the inside.

Here, "liberating" means that an object is liberated from fine carbons that it supports by chemical treatments (acids, alkalis, enzymes and the like) or physical treatments (heat, electricity and the like) through decomposition, evaporation, melting, dissolution, precipitation and the like.

The invention (9) is the fine carbon dispersion object according to the invention (8) which is produced by adding the object to the fine carbon-dispersed liquid medium and then performing induced phase transfer treatment in which the fine carbons are transferred from the liquid medium side to the object side.

Here, "induced phase transfer treatment" is not particularly specified, as long as it is a process for separating fine carbons from a dispersant and moving the fine carbons from the liquid dispersant to the other phase, examples of which include heating for enhancing molecular movement of fine carbons (for example, electromagnetic wave treatment), applying oscillation energy (for example, ultrasonification), pressuring and the like.

The invention (10) is the fine carbon dispersion object according to the invention (9) wherein the induced phase transfer treatment is electromagnetic wave treatment or ultrasonification.

The invention (11) is the fine carbon dispersion object according to any one of the inventions (8) to (10) wherein the object is an ultrafine fiber or a higher paraffin.

Here, an "ultrafine fiber" refers to a fiber having a diameter of no more than 1,000 µm, preferably of no more than 100 µm, and more preferably of no more than 10 µm. "Higher paraffin" refers to a paraffin having a melting point of 40°C or higher. For example, a polyester fiber and a foamed urethane fiber may be mentioned.

The invention (12) is the fine carbon dispersion object according to any one of the inventions (8) to (11) which is a mediator material for dispersing the fine carbons in a product during production of the product.

Here, the object composing a "mediator material" may remain in the final product after liberating the fine carbons so that it may function as a component composing the product for example, or may not remain in the final product so that it may function simply as a carrier for dispersing the fine carbons in the product.

The invention (13) is a process for producing a fine carbon dispersion object in which fine carbons are dispersed within a gel or a dried product thereof, comprising the step of crosslinking a crosslinkable component contained in a fine carbon-dispersed liquid medium or a dried product thereof containing nano- to micro-sized fine carbons and a dispersant for the fine carbons.

Here, "crosslinking" includes both chemical crosslinking and physical crosslinking. "Chemical crosslinking" means covalent crosslinking, examples of which include crosslinking with the use of a crosslinking agent and crosslinking through radical polymerization (radiation polymerization, photopolymerization and plasma polymerization). Such chemical crosslinking is in general characterized in that crosslinkage formed is rigid. Specific examples of the former include those wherein chemical crosslinking dispersant/crosslinking agent are polymer having an amino group, a hydroxyl group/dialdehyde compound; halogen-based polymer, carboxy polymer ester, polymer having an isocyanato, an epoxy group, a methylol group/amine compound; polymer having a carboxyl group/aziridine compound; polymer having a nitrile group, a mercapto group, a carboxyl group and the like/di- or poly-methylol phenolic resin; amine-, diene-based polymer/halide series; polymer having an active hydrogen, such as -OH, -SH, NH₂, -COOH and the like/di- and poly-isocyanato compound; polymer having a chlorosulfone group, an isocyanato group, cellulose and the like/alcohol, such as diol, polyol, bisphenol and the like; polymer having a carboxyl group, a hydroxyl group, a mercapto group, a chlorosulfone group/diepoxy compound. Specific examples of the latter include, for radiation polymerization, as those to be crosslinked in water by being irradiated with γ-ray, polyvinyl alcohol, polymethyl vinyl ether, polyethylene, polystyrene, polyacrylate and natural rubbers, for photopolymerization, as those to be crosslinked by a photocrosslinking agent, such as a diazo resin, bisazide, dichromate and the like, water-soluble macromolecules, such as polyvinyl alcohol and N-vinyl pyrrolidone and, for plasma polymerization, as those to be crosslinked by contact with an inert gas excited with the use of high-frequency electric discharge, polyethylene, polytetrafluoroethylene and nylon.

Next, "physical crosslinking" refers to physical bridging through ionic bonding (Coulomb force bonding), hydrogen bonding, coordinate bonding, helix formation or hydrophobic bonding. Such physical crosslinking is in general **characterized in that** it causes sol-gel transition through changes in heat, solution species, ionic strength and pH. For ionic bonding, specific examples of those crosslinkable by mixing include polyvinylbenzyl trimethylammonium and chloride-sodium polymethacrylate. For hydrogen bonding, specific examples of those crosslinkable by freeze-drying include polyacrylic acid, specific examples of those crosslinkable by freeze-thawing include polyacrylic acid-polyviniyl alcohol and specific examples of those crosslinkable by freeze-low temperature crystallization include polymethacrylic acid-polyethylene glycol. For coordinate bonding, specific examples of those crosslinkable by chelating reaction include polyvinyl alcohol-Cu²⁺ and polyacrylic acid-Fe³⁺. For helix formation, specific examples of those crosslinkable by helix formation between macromolecular chains include agar, gelatin, carrageenan and alginic acid. For hydrophobic bonding, specific examples of those crosslinkable by hydrophobic interaction include ovalbumin and serum albumin.

The invention (14) is the process according to the invention (13) wherein the crosslinkable component is a dispersant.

The invention (15) is a process for producing a fine carbon dispersion object in which fine carbons are dispersed within a gel, which adopts a double structure made of inner and outer layers, comprising the step of adding a fine carbon-dispersed liquid medium containing nano- to micro-sized fine carbons and a dispersant for the fine carbons and containing a crosslinkable component to a liquid medium containing a gelling agent capable of gelling the component, wherein the inner layer is the fine carbon-dispersed liquid medium and the outer layer is a gelled product of the fine carbon-dispersed liquid medium.

Here, considering the embodiments of processes according to the inventions (13) to (15) as Group B, preferred inventions of Group B include the following.

A preferred embodiment (B-1) is a process for producing a bead-like or fiber-like gel or a dried product thereof containing nano- to micro-sized carbons, which adopts a double structure made of inner and outer layers, comprising the step of adding a gellable fine carbon-dispersed liquid medium containing nano- to micro-sized carbons and a dispersant for the carbons to a liquid medium containing a gelling agent capable of gelling the carbon-dispersed liquid medium, wherein the inner layer is the carbon-dispersed liquid medium and the outer layer is a gelled product of the fine carbon-dispersed liquid medium.

Here, "adding" of "the step of adding" is not particularly specified as long as a bead-like or fiber-like gel may be obtained, examples of which include "adding dropwise" as described above for a bead-like gel and "adding flow-wise" as described above for a fiber-like gel. It may also include other steps than the above step, examples of which include a step for producing the carbons (for example, nanocarbons), a step for refining the carbons, a step for producing the carbon-dispersed liquid medium, a step for producing the liquid medium containing a gelling agent, a step for drying the gel and the like.

A preferred embodiment (B-2) is the process according to the preferred embodiment (B-1) wherein the carbon-dispersed liquid medium is a solution or suspension of the carbons.

A preferred embodiment (B-3) is the process according to the preferred embodiment (B-1) or (B-2) wherein the dispersant is crosslinkable by the gelling agent.

A preferred embodiment (B-4) is the process according to any one of the preferred embodiments (B-1) to (B-3) wherein the dispersant is a surface active agent.

A preferred embodiment (B-5) is the process according to any one of the preferred embodiments (B-1) to (B-4) wherein the carbons are carbon nanotubes (single- and multi-walled types and cup-stack types), carbon nanofibers, carbon nanohorns, graphite, fullerenes, carbon microhorns or microcarbon filters.

A preferred embodiment (B-6) is a process for producing a film-like, plate-like or bulk-like gel or a dried product thereof, which includes nano-to micro-sized carbons, comprising (1) a step of coating a gellable carbon-dispersed liquid medium containing nano- to micro-sized carbons and a dispersant for the carbons into a film, followed by gelling the carbon-dispersed liquid medium to obtain a film-like gel, or (2) a step of coating a gellable carbon-dispersed liquid medium containing nano- to micro-sized carbons and a dispersant for the carbons into a film, followed by drying to obtain a film-like dried product and then applying, to the film-like dried product, a liquid medium containing a gelling agent capable of gelling the film-like dried product when the product is wetted again, to thereby obtain a film-like gel or (3) a step of repeating the step (1) and/or (2) to thereby obtain a plate-like or bulk-like gel.

Here, "coating" includes not only applying the liquid medium with a coater and the like, but also spraying the liquid medium. It may also include other steps than the above step, examples of which include a step for producing the carbons (for example, nanocarbons), a step for refining the carbons, a step for producing the carbon-dispersed liquid medium, a step for producing the liquid medium containing a gelling agent, a step for drying the gel and the like.

With respect to the step (1) above, an embodiment wherein the carbon-dispersed liquid medium is coated into a film, followed by spraying the gelling agent directly into the film-like liquid medium or irradiating the film-like liquid medium with light or radiation to gel the carbon-dispersed liquid medium may be mentioned, for example. With respect to the step (2) above, an embodiment wherein a liquid medium in which the gelling agent is dispersed is applied to the film-like dried product, to thereby allow the film-like dried product to absorb the liquid medium so that the absorber may be gelled by the gelling agent may be mentioned, for example. With respect the step (3) above, an embodiment wherein after forming the film-like gel, a procedure of coating it with the liquid medium again and applying the gelling agent is repeated several times may be mentioned, for example.

A preferred embodiment (B-7) is the process according to the preferred embodiment (B-6) wherein the carbon-dispersed liquid medium is a solution or suspension of the carbons.

A preferred embodiment (B-8) is the process according to the preferred embodiment (B-6) or (B-7) wherein the dispersant is crosslinkable.

A preferred embodiment (B-9) is the process according to any one of the preferred embodiments (B-6) to (B-9) wherein the dispersant is a surface active agent.

A preferred embodiment (B-10) is the process according to any one of the preferred embodiments (B-16) to (B-19) wherein the carbons are carbon nanotubes (single- and multi-walled types and cup-stack types), carbon nanofibers, carbon nanohorns, graphite, fullerenes, carbon microhorns or microcarbon filters.

A preferred embodiment (B-11) is a process for producing a gel or a dried gel thereof containing nano- to micro-sized carbons in a shape corresponding to a mold, comprising (1) a step of placing a gellable carbon-dispersed liquid medium containing the nano- to micro-sized carbons and a dispersant for the carbons in the mold, followed by gelling the carbon-dispersed liquid medium to thereby obtain a gel in a shape corresponding to the mold, or (2) a step of placing a gellable carbon-dispersed liquid medium containing the nano- to micro-sized carbons and a dispersant for the carbons into the mold, followed by drying to obtain a dried product in a shape corresponding to the mold and then applying, to the dried product, a liquid medium containing a gelling agent capable of gelling the dried product when the product is wetted again, to thereby obtain a gel in a shape corresponding to the mold.

With respect to (1) above, an embodiment wherein the carbon-dispersed liquid medium is introduced into the mold, followed by spraying the gelling agent directly into the carbon-dispersed liquid medium in the mold, introducing a liquid medium containing the gelling agent or irradiating the carbon-dispersed liquid medium with light or radiation to gel the carbon-dispersed liquid medium may be mentioned, for example. With respect to the step (2) above, an embodiment wherein a liquid medium in which the gelling agent is dispersed is applied to the dried product, to thereby allow the dried product to absorb the liquid medium so that the absorber may be gelled by the gelling agent may be mentioned, for example.

Shapes and sizes of the "mold" are not particularly specified and are determined according to applications. Also "a shape corresponding to the mold" does not necessarily mean a shape perfectly identical to the mold, but also includes all the shapes resulting from production using the mold, including an embodiment wherein the gel obtained using the mold is larger than the mold due to expansion after release from the mold.

A preferred embodiment (B-12) is the process according to the preferred embodiment (B-11) wherein the mold is a round container, a polygonal container, a spherical container or a rectangular parallelepiped container and the gel in a shape corresponding to the mold is a round plate-like gel, a polygonal plate-like gel, a spherical gel or a rectangular parallelepiped gel, respectively.

A preferred embodiment (B-13) is the process according to the preferred embodiment (B-11) or (B-12) wherein the carbon-dispersed liquid medium is a solution or suspension of the carbons.

A preferred embodiment (B-14) is the process according to any one of the preferred embodiments (B-11) to (B-13) wherein the dispersant is crosslinkable.

A preferred embodiment (B-15) is the process according to any one of the preferred embodiments (B-11) to (B-14) wherein the dispersant is a surface active agent.

A preferred embodiment (B-16) is the process according to any one of the preferred embodiments (B-11) to (B-15) wherein the carbons are carbon nanotubes (single- and multi-walled types and cup-stack types), carbon nanofibers, carbon nanohorns, graphite, fullerenes, carbon microhorns or microcarbon filters.

The invention (16) is a process for producing a fine carbon dispersion object in which fine carbons are dispersed within an object, comprising a step of dispersing object raw material monomers in a fine carbon-dispersed liquid medium containing nano- to micro-sized fine carbons and a dispersant for the carbons, a step of polymerizing the object raw material monomers and a step of removing the liquid medium. Here, "dispersing the monomers" also includes dissolving, suspending and emulsifying them.

The invention (17) is a process for producing a fine carbon dispersion object in which fine carbons are dispersed within an object, comprising a step of dispersing an object raw material polymer in a fine carbon-dispersed liquid medium containing nano- to micro-sized fine carbons and a dispersant for the carbons and a step of removing the liquid medium. Here, "dispersing a polymer" also includes dissolving, suspending and emulsifying it.

The invention (18) is a process for producing a fine carbon dispersion object in which fine carbons are dispersed on the surface of an object, comprising a step of immersing the object in a fine carbon-dispersed liquid medium containing nano- to micro-sized fine carbons and a dispersant for the fine carbons and a step of removing the liquid medium.

The invention (19) is the process according to the invention (18) which further includes a step of induced phase transfer treatment in which the fine carbons are transferred from the liquid medium side to the object side.

The invention (20) is an adsorbent material comprising the fine carbon dispersion object according to any one of the inventions (1) to (12).

Here, objects to be adsorbed are not particularly specified and may be any substances contained in liquids and gases. In the case of liquid phase treatments, bleaching, dehydration or degumming of petroleum fractions (solvents, fuel oils, lubricants, waxes), elimination of odors, distastefulness and colors from supply water, bleaching of animal and vegetable oils, bleaching of crude syrup, clarification of beverages and medicated beverages, recovery of products such as vitamins from fermented liquids, purification of process liquid wastes for preventing water pollution (including ion exchange), elimination of salt and ash content from process water (including deionization by means of ion exchange, ion retardation, ion exclusion) and separation of aromatic hydrocarbons from aliphatic hydrocarbons may be mentioned, for example. In the case of gas phase treatments, solvent recovery from the air exhausted from evaporation processes such as drying of paints, newspaper printing, dry cleaning of clothing or rayon spinning, dehydration of gases (including in-package drying), elimination of odors and toxic gases from ventilator systems or exhaust gases for preventing air pollution, separation of rare gases (krypton, xenon) at low temperatures, elimination of impurities from source air to low temperature separation, elimination of odors from gases for lightings in cities and adsorption of problem substances in gas phase separation of low molecular weight hydrocarbon gases (adsorption with reflux or substitute for low temperature separation) may be mentioned, for example. Further, applications are possible to dyeing of textiles and the like. In other words, various colors may be imparted because fine carbons (for example, CNT) function as "adsorption sites."

The invention (21) is the adsorbent material according to the invention (20) which is used for adsorbing contaminants and harmful substances in liquids and gases.

Examples of such contaminants and harmful substances include hydrogen chloride, vinyl chloride, sodium hydroxide, tetrachloroethylene (solvent), BDBPP compounds (flameproofing agent), tributyltin compounds (anti-bacterial and anti-fungal agents), formaldehyde (resin finishing agent), organomercurous compounds (anti-bacterial and anti-fungal agents), dieldrin (mothproofing agent), sulfates (detergent), DTTB (mothproofing agent), potassium hydroxide (detergent), trichloroethylene (solvent), APO (flameproofing agent), TDBPP, methanol (solvent), triphenyltin compounds and so on.

The invention (22) is the adsorbent material according to the invention (20) or (21) which is used for filtering systems for industrial and drinking waters, demineralizers, a variety of chromatography, systems for adsorbing substances harmful to human beings such as carcinogens, air cleaners, exhaust gas cleaners and electrically conductive materials.

With respect to filtering systems for drinking water, substances to be adsorbed are not particularly specified, and include free residual chlorine, turbidities, trihalomethanes, soluble lead, agricultural chemicals (CAT), tetrachloroethylene, trichloroethylene, 1,1,1-trichloroethane and fungal odors (2-MIB). Also, with respect to adsorbing substances harmful to human beings such as carcinogens, such carcinogens among substances to be adsorbed are not particularly specified, and include ethidium bromide, trihalomethanes and various endocrine disruptors (for example, nonyl phenol) for example. With respect to air cleaners, substances to be adsorbed are not particularly specified, and include pollens, cigarette smokes and house dusts such as tick shells in the room. Further, specific applications for "electrically conductive materials" include electronics, electrical appliances, mechanical parts and various components for vehicles and the like. In particular, for use in combination with a heat-resistant gel, materials for fuel cell separators may be mentioned as a preferable example.

The invention (23) is an electrically conductive material comprising the fine carbon dispersion object according to any one of the inventions (1) to (12).

Here, specific applications for the "electrically conductive materials" according to the present invention include electronics, electrical appliances, mechanical parts and various components for vehicles and the like. In particular, for use in combination with a heat-resistant gel, materials for fuel cell separators may be mentioned as a preferable example.

The invention (24) is a filtering system for industrial and drinking waters, a demineralizer, a variety of chromatography, a system for adsorbing substances harmful to human beings such as carcinogens, an air cleaner, an exhaust gas cleaner or an electrical appliance, comprising the adsorbent material according to the inventions (20).

The invention (25) is a process for producing a product in which fine carbons are dispersed, comprising the step of adding the fine carbon dispersion object according to any one of the inventions (1) to (12) in a dry or wet manner to a system in which the product or a raw material for the product is present.

Here, the invention is a technique for fusing highly dispersed fine carbons into an object in a dry or wet manner. Traditionally, procedures adopted for introducing highly dispersed fine carbons into fibers, glasses, metals and organic and inorganic crystals or amorphous thereof have been by dry introduction, that is, by adding powdery fine carbons. Here, for example, carbon nanotubes are present in a form called as "bundle." As such, it has extremely been difficult to obtain composite materials into which carbon nanotubes are highly fused, in other words, materials in which such carbon nanotubes are singly discrete. According to the invention described above, first, a bundle of carbon nanotubes is used with a dispersant to prepare a solution of highly dispersed carbon nanotubes. Next, to this dispersion liquid, a substance referred to as a "mediator substance" or "medium" is added to transfer the carbon nanotubes as dispersed to the mediator substance. Using the mediator substance carrying the highly dispersed carbon nanotubes as a starting material, a desired material is prepared. Thereafter, the mediator substance is decomposed or otherwise treated to remove the mediator substance, as necessary. Preferable as mediator substances are materials that are decomposable by acids, alkalis or heat and materials that undergo phase transfer such as solid/liquid through temperature changes. Here, "dry manner" means a mode of addition to a solid phase and "wet manner" means a mode of addition to a liquid phase.

The invention (26) is a process for producing a product in which fine carbons are dispersed, comprising the step of adding the fine carbons according to any one of the inventions (8) to (12) to a system in which the product or a raw material for the product is present, the system sufficing the predetermined requirements of the invention (8).

The invention (27) is the process according to the invention (26) wherein the product is an aramid fiber and the object is a material soluble in concentrated sulfuric acid.

The invention (28) is a non-aqueous dispersion liquid of carbon nanotubes which use a fullerene as a dispersant for the carbon nanotubes.

The invention (29) is an aqueous dispersion liquid of carbon nanotubes which uses a cyclodextrin and a fullerene as dispersants for the carbon nanotubes.

The invention (30) is dispersion liquid for producing fine carbons in which the fine carbons are dispersed on the surface and/or on the inside, which are a liquid medium in which the fine carbons are dispersed by a dispersant for nano- to micro-sized fine carbons.

A preferred embodiment of the invention described above is dispersions of carbon nanotubes for producing a composite material in which carbon nanotubes are uniformly dispersed, which are a liquid medium in which the carbon nanotubes are dispersed by a dispersant for the carbon nanotubes. The inventions (31) to (33) below relate to this preferred embodiment.

The invention (31) is the dispersion liquid according to the invention (30) wherein the liquid medium is a non-aqueous medium, the fine carbons are carbon nanotubes and the dispersant is a fullerene.

Here, "non-aqueous" means that a liquid medium as a base is a water-insoluble solvent. Also, "water-insoluble solvent" means a solvent having a solubility in water at 23.5°C of 0.2% by weight or less. "Fullerene" is a concept which encompasses fullerene dimers and the like, for example, in addition to fullerenes such as C60, C70 and C82. Examples of non-aqueous solvents include non-aqueous solvents preferably having an aromatic ring, such as toluene, anthracene and naphthalene (dissolved with acetonitrile).

The invention (32) is the dispersion liquid according to the invention (30) wherein the liquid medium is an aqueous liquid medium, the fine carbons are carbon nanotubes and the dispersant is a surface active agent capable of forming globular micelles having a diameter of from 50 to 2,000 nm in the liquid medium or a water-soluble macromolecule having a weight average molecular weight of from 10,000 to 50,000,000.

Here, "aqueous" means that a liquid medium as a base is a water-soluble solvent (aqueous solvent). Here, "water-soluble solvent" means a solvent having a solubility in water at 23.5°C of 20% by weight or more, including water.

"Globular micelle" (microsomes) are a micelles formed by a surface active agent, which have globular housing space. For example, in the case of a phospholipid-based surface active agent, such microsomes are called "liposomes." Here, a diameter of a globular micelle (microsome) refers to a value as determined according to a light scattering method (pH-unadjusted aqueous solution at 20°C).

"Water-soluble macromolecule" (pseudomicelle type) refers to a macromolecule having a weight average molecular weight of 10,000 to 50,000,000 and, preferably, of 10,000 to 5,000,000. Here, a weight average molecular weight is based on a value determined by gel permeation, high-performance liquid chromatography using pullulan as the standard.

The invention (33) is the dispersion liquid according to the invention (30) wherein the liquid medium is an aqueous liquid medium, the fine carbons are carbon nanotubes and the dispersant is a cyclodextrin and fullerene.

Here, "cyclodextrin" is a cyclic oligosaccharide obtained by acting an enzyme (cyclodextrin glucanotransferase) on starch, which may be of any of the types α, β and γ.

The invention (34) is a fine carbon-dispersed liquid medium containing nano-to micro-sized fine carbons and a dispersant for the fine carbons, including as one dispersant a substance for promoting and/or maintaining unbundled state of the fine carbons.

Here, examples of such substances for promoting unbundled state include charged substances (anions or cations, such as NaI) capable of attaching to and infiltrating into fine carbons or intervening between fine carbons to thereby generate repulsive forces between them. Also, examples of such substances for maintaining unbundled state include interfering substances (for example, a macromolecular compound, such as κ-carrageenan) capable of intervening between separated fine carbons to thereby physically prevent them from bonding or approaching each other.

The invention (35) is the fine carbon-dispersed liquid medium according to the invention (34) which is used for producing fine carbons, wherein the fine carbons are dispersed on the surface and/or on the inside.

The invention (36) is a dispersant for fine carbons, having attachment sites to nano- to micro-sized fine carbons and groups for inducing electrical attraction, wherein one of the groups for inducing electrical attraction of the dispersant attached to one of the fine carbons attracts another group for inducing electrical attraction of the dispersant attached to another fine carbon through electrical attraction generated between them to promote unbundled state of the fine carbons.

Here, "group for inducing electrical attraction" is an anionic or cationic group. Incidentally, the dispersant for fine carbons may be a compound having both electrical properties in one molecule (for example, a zwitterionic surface active agent having an anionic group and a cationic group) or may be a combination of a compound having one electrical property (for example, a cationic surface active agent) and a compound having the other electrical property (for example, an anionic surface active agent). Also, an "attachment site" means a portion having affinity to a fine carbon, for example, a hydrophobic portion (for example, an alkylene group) when a fine carbon is hydrophobic.

The invention (37) is the dispersant for fine carbons according to the invention (36) having anionic and cationic groups, wherein an anionic group and a cationic group attached to one of the fine carbon attract another cationic group and another anionic group attached to another fine carbon respectively through electrical attraction generated between them to promote unbundled state of the fine carbons.

The invention (38) is the dispersant according to the invention (37) which is an zwitterionic surface active agent.

The invention (39) is a fine carbon dispersion object produced by using a fine carbon-dispersed liquid medium containing nano- to micro-sized fine carbons and the dispersant according to any one of the inventions (36) to (38).

### EFFECT OF THE INVENTION

According to the inventions (1) and (2), since the fine carbons of the fine carbon dispersion object are present with extremely high uniformity in the dispersion object (on the surface and/or on the inside), such effect is provided that the dispersion object may retain physical properties inherent to the fine carbons (for example, strength, adsorptivity and electrical conductivity) in a uniform manner regardless of the locations.

According to the invention (3), since the nano- to micro-sized fine carbon-dispersed liquid medium is gelled, such effect is provided that characteristics of the gel excellent in permeability may be enjoyed and, since the nano- to micro-sized fine carbons having extremely small particle diameters are present in the network structure of the gel with extremely high uniformity, such effect is provided that very high adsorptivity may be obtained.

According to the invention (4), since the gel of the outer layer is made by gelling the liquid medium in the inner layer, such effect is provided that affinity of the liquid medium between the outer and inner layers may be increased, with a result that infiltration, permeability and adsorptivity can further be increased. Further, since the nano- to micro-sized fine carbon-dispersed liquid medium of the inner layer is enclosed by the gel of the outer layer in configuration, such effect is provided the liquid that is unsuitable for handling may be treated in the same way as a solid and, since the outer layer is a gel to provide excellent infiltration and the inner layer is a nano- to micro-sized carbon-dispersed liquid medium, such effect is provided that high adsorbing power may be provided especially in adsorbing substances having high affinity with the liquid medium.

Here, effects of the preferred embodiments (A-1) to (A-10) of the gel or dried gel according to the inventions (2) to (4) will be discussed.

Since the preferred embodiment (A-1) is made by gelling the nano- to micro-sized carbon-dispersed liquid medium, such effect is provided that characteristics of the gel excellent in permeability may be enjoyed and, since the nano- to micro-sized fine carbons having extremely small particle diameters are considered present in the network structure of the gel with extremely high uniformity, such effect is provided that very high adsorptivity may be obtained.

Since the carbon-dispersed liquid medium as a raw material is a solution or suspension, the preferred embodiment (A-2) is understood to have, in addition to the effect of the preferred embodiment (A-1), such effect that the carbons having even smaller particle diameters may be present in the network structure of the obtained gel, with a result that even higher adsorptivity is provided.

Since the dispersant dissolved in the liquid medium is gelled, the preferred embodiment (A-3) provides, in addition to the effect of the preferred embodiment (A-1) or (A-2), such effect that a more uniform network structure may be formed with carbons having extremely small particle diameters incorporated in the network structure, with a result that even higher adsorbing power is provided.

Since a crosslinkable surface active agent is used, the preferred embodiment (A-4) provides, in addition to the effects of the preferred embodiments (A-1) to (A-3), such effect that the carbons may be held at it hydrophobic sites and a solvent (hydrophilic solvent) may be held at its hydrophilic sites.

The preferred embodiment (A-5) provides, in addition to the effects of the preferred embodiments (A-1) to (A-4), such effect that nano- to micro-sized carbons in various forms as suitable for various applications, such as carbon nanotubes (single- and multi-walled types and cup-stack types), carbon nanofibers, carbon nanohorns, graphite, fullerenes, carbon microhorns and microcarbon filters may be used.

The preferred embodiment (A-6) provides such effect that it may have forms as suitable for various applications, such as bead-like, fiber-like, film-like, plate-like or bulk-like forms.

Since the gel of the outer layer is made by gelling the liquid medium in the inner layer, the preferred embodiment (A-7) provides, in addition to the effect of the preferred embodiments (A-6), such effect that affinity of the liquid medium between the gel of the outer layer and the liquid medium of the inner layer is increased, with a result that infiltration, permeability and adsorptivity may further be increased. Further, since the nano- to micro-sized fine carbon-dispersed liquid medium of the inner layer is enclosed by the gel of the outer layer in configuration, such effect is provided that the liquid that is unsuitable for handling may be treated in the same way as a solid and, since the outer layer is a gel to provide excellent infiltration and, in addition, the inner layer is a nano- to micro-sized carbon-dispersed liquid medium, such effect is provided that high adsorbing power may be provided especially in adsorbing substances having high affinity with the liquid medium.

The preferred embodiment (A-8) provides, in addition to the effect of the preferred embodiment (A-7), provides such effect that adsorptive characteristics may further be enhanced due to the increase in gel surface area per unit weight as a result of having a shape closer to a globule by the use of the procedure of dropwise addition and provides such effect that sizes optimal in relationship with applications may be obtained as a result of having desired length and thickness by the use of the procedure of flow-wise addition.

Assuming a film-like, plate-like or bulk-like form, the preferred embodiment (A-9) provides, in addition to the effect of the preferred embodiments (A-6), such effect that applicability in various uses in which such forms are required may be obtained.

Being a dried gel that is excellent in air permeability and having the nano- to micro-sized carbons having extremely small particle diameters uniformly dispersed in the network structure of the dried gel, the preferred embodiment (A-10) provides such effect that substances contained in a gas such as the air may be adsorbed at extremely high efficiency.

According to the invention (5), since polymerization is effected with raw material monomers dispersed in the fine carbon liquid medium, such effect is provided that high internal dispersity of the fine carbons in the polymerized product obtained may be guaranteed.

According to the invention (6), since the liquid medium is removed with a raw material polymer dispersed in the fine carbon liquid medium, such effect is provided that high internal dispersity of the fine carbons in the removed product obtained may be guaranteed.

According to the invention (7), since the raw material is immersed in the fine carbon liquid medium, such effect is provided that high surface dispersity of the fine carbons in the immersed product obtained may be guaranteed.

According to the inventions (8) to (12), since the object composing the fine carbon dispersion object is made of a material which liberates the fine carbons under predetermined conditions, by adding the fine carbon dispersion object to the liquid medium under such predetermined conditions, the fine carbons and the object will separate, with a result that the fine carbons will disperse in the liquid medium. By dissolving raw material monomers or a raw material polymer for a product and performing polymerization and removal of solvent and so on under such circumstances, the product in which the fine carbons are uniformly dispersed may be produced. With respect to certain liquid solvents, it is difficult to initially disperse fine carbons, in which cases, it is extremely useful as a material for dispersing the fine carbons in the liquid medium.

According to the invention (13), since the nano- to micro-sized carbon-dispersed liquid medium or the crosslinkable component contained in the dried product thereof is crosslinked, such effect is provided that characteristics of the gel excellent in permeability may be enjoyed and fine carbon dispersion object in which nano- to micro-sized fine carbons having extremely small particle diameters are present in the network structure of the gel with extremely high uniformity may be produced.

Being made by gelling the dispersant dissolved in the liquid medium, the invention (14) provides, in addition to the effect of the invention (13), such effect that a more uniform network structure may be formed and carbons having extremely small diameters may be incorporated in the network structure, with a result that a gel or dried gel having even higher adsorbing power can be obtained and, in addition, since no other gelling agents are needed to be added, cost performance will be excellent.

The present invention (15) provides such effect that a bead-like or fiber-like gel or a dried gel thereof incorporating nano- to micro-sized carbons, which adopt a double structure made of inner and outer layers wherein the inner layer is the carbon-dispersed liquid medium and the outer layer is a gelled product of the carbon-dispersed liquid medium may be produced in an extremely easy manner in which the nano- to micro-sized carbon-dispersed liquid medium is added to a liquid medium containing a gelling agent for the medium. It also provides such effect that a gel or a dried gel having various forms and sizes according to applications may easily be obtained by altering the procedures of addition, such as dropwise or flow-wise.

Here, effects of the preferred embodiments (B-1) to (B-16) of the gel or dried gel according to the inventions (13) to (15) will be discussed.

The preferred embodiment (B-1) provides such effect that a bead-like or fiber-like gel or a dried gel thereof incorporating nano- to micro-sized carbons, which adopts a double structure made of inner and outer layers wherein the inner layer is the carbon-dispersed liquid medium and the outer layer is a gelled product of the carbon-dispersed liquid medium may be provided in an extremely easy manner in which the nano- to micro-sized carbon-dispersed liquid medium is added to a liquid medium containing a gelling agent for the medium. It also provides such effect that a gel or a dried gel having various forms and sizes according to applications may easily be obtained by altering the procedures of addition, such as dropwise or flow-wise.

Since the carbon-dispersed liquid medium as a raw material is a solution or suspension, the preferred embodiment (B-2) is understood to provide such effect that the carbons having even smaller particle diameters may be present in the network structure of the obtained gel, with a result that a gel or dried gel having even higher adsorptivity can be obtained.

Since the dispersant dissolved in the liquid medium is gelled, the preferred embodiment (B-3) provides such effect that a more uniform network structure with carbons having extremely small particle diameters incorporated in the network structure may be formed, with a result that a gel or dried gel having even higher adsorbing power can be obtained and, in addition, since no other gelling agents are needed to be added, cost performance will be excellent.

Since a crosslinkable surface active agent is used, the preferred embodiment (B-4) provides such effect that carbons may be held at it hydrophobic sites and a solvent (hydrophilic solvent) may be held at its hydrophilic sites.

The preferred embodiment (B-5) provides such effect that a gel or dried gel containing nano- to micro-sized carbons in various forms as suitable for various applications, such as carbon nanotubes (single- and multi-walled types and cup-stack types), carbon nanofibers, carbon nanohorns, graphite, fullerenes, carbon microhorns and microcarbon filters may be obtained.

The preferred embodiment (B-6) provides such effect that a gel or dried gel excellent in permeability and air permeability in which nano- to micro-sized carbons having extremely small particle sizes are present in the network structure with extremely high uniformity may be obtained in a very easy operation and that the gel or dried gel may be shaped into a desired form (film-like, plate-like or bulk-like) according to applications. It also provides such effect that, by vaporizing the liquid medium in the carbon-dispersed liquid medium before the gelling step and then applying the liquid medium with the gelling agent present in it at the step (2) or (3), the dried product may absorb the liquid medium, with a result that a gel can evenly be formed in a short period of time.

Since the carbon-dispersed liquid medium as a raw material is a solution or suspension, the preferred embodiment (B-7) is understood to provide such effect that the carbons having even smaller particle diameters may be present in the network structure of the obtained gel, with a result that a gel or dried gel having even higher adsorptivity can be obtained.

Since the dispersant dissolved in the liquid medium is gelled, the preferred embodiment (B-8) provides such effect that a more uniform network structure with carbons having extremely small particle diameters incorporated in the network structure may be formed, with a result that a gel or dried gel having even higher adsorbing power can be obtained and, in addition, since no other gelling agents are needed to be added, cost performance will be excellent.

Since a crosslinkable surface active agent is used, the preferred embodiment (B-9) provides such effect that a gel capable of retaining carbons at it hydrophobic sites and retaining a solvent (hydrophilic solvent) at its hydrophilic sites may be obtained.

The preferred embodiment (B-10) provides such effect that a gel or dried gel containing nano- to micro-sized carbons in various forms as suitable for various applications, such as carbon nanotubes (single- and multi-walled types and cup-stack types), carbon nanofibers, carbon nanohorns, graphite, fullerenes, carbon microhorns and microcarbon filters may be obtained.

The preferred embodiment (B-11) provides such effect that a gel or dried gel excellent in permeability and air permeability in which nano- to micro-sized carbons having extremely small particle sizes are present in a network structure with extremely high uniformity may be obtained through a very easy operation and that the gel or dried gel may be shaped into a desired form according to applications since a mold is used in production.

The preferred embodiment (B-12) provides such effect that a round plate-like gel, a polygonal plate-like gel, a spherical gel, a rectangular parallelepiped gel or a dried gel thereof may be obtained through an easy operation.

Since the carbon-dispersed liquid medium as a raw material is a solution or suspension, the preferred embodiment (B-13) is understood to provide such effect that the carbons having even smaller particle diameters may be present in the network structure of the obtained gel, with a result that a gel or dried gel having even higher adsorptivity can be obtained.

Since the dispersant dissolved in the liquid medium is gelled, the preferred embodiment (B-14) provides such effect that a more uniform network structure with carbons having extremely small particle diameters incorporated in the network structure may be formed, with a result that a gel or dried gel having even higher adsorbing power can be obtained and, in addition, since no other gelling agents are needed to be added, cost performance will be excellent.

Since a crosslinkable surface active agent is used, the preferred embodiment (B-15) provides such effect that a gel capable retaining carbons at it hydrophobic sites and retaining a solvent (hydrophilic solvent) at its hydrophilic sites may be obtained.

The preferred embodiment (B-16) provides such effect that a gel or dried gel containing nano- to micro-sized carbons in various forms as suitable for various applications, such as carbon nanotubes (single- and multi-walled types and cup-stack types), carbon nanofibers, carbon nanohorns, graphite, fullerenes, carbon microhorns and microcarbon filters may be obtained.

According to the invention (16), since polymerization is effected with raw material monomers dispersed in the fine carbon liquid medium, such effect is provided that high internal dispersity of the fine carbons in the polymerized product obtained may be guaranteed.

According to the invention (17), since the liquid medium is removed with a raw material polymer dispersed in the fine carbon liquid medium, such effect is provided that high internal dispersity of the fine carbons in the removed product obtained may be guaranteed.

According to the invention (18), since the raw material is immersed in the fine carbon liquid medium, such effect is provided that high surface dispersity of the fine carbons in the immersed product obtained may be guaranteed.

According to the invention (19), by performing the induced phase transfer treatment step, such effect is provided that the fine carbons may reliably be transferred from the liquid medium side to the object side.

The invention (20) provides such effect that remarkably higher adsorbing power in comparison with other adsorbents (such as activated carbon) may provided to the extent that complete removal that has never been attained with activated carbon and the like can now be attained, for example, in experiments for adsorbing ethidium bromide known as a DNA contaminant.

The invention (21) provides such effect that by the use of the high adsorbing power, contaminants and harmful substances in liquids or gases may be adsorbed to suppress influences on human body by such substances.

The invention (22) provides such effect that harmful substances of interest may be removed to a degree higher than has been expected so far, as used for filtering systems for industrial and drinking waters, demineralizers, a variety of chromatography, systems for adsorbing substances harmful to human beings such as carcinogens, air cleaners and exhaust gas cleaners, since it has much higher adsorbing power than existing adsorbents in such applications (such as activated carbon). Further, such effect is provided that it may be useful as special-purpose electronic materials for which adsorptivity is required, since nano- to micro-sized carbons having conducting and semiconducting properties are used. Also, the present invention is excellent in permeability and air permeability in addition to adsorptivity and, therefore, useful for electronic materials for which such properties are required.

The invention (23) is extremely epoch-making in that it has for the first time solved the important problem that nano- to micro-sized carbons having conducting and semi-conducting properties, when applied to products, cannot exercise electrical conductivity which should be inherent to such carbons, by allowing the carbons to be present as dispersed. In other words, although the reasons are not clear, the inventors have found anew that such effect is provided that remarkable enhancement in electrical conductivity may be provided, by allowing the carbons which have conventionally been present as clustered to be present as dispersed.

The invention (24) provides such effect that substances of interest may more efficiently be adsorbed in comparison with conventional adsorbent materials (such as activated carbon) by virtue of inclusion of the adsorbent material having the effect described above, to enhance performance of instruments and devices. Further, since electrical appliances and the like contain electrically conductive materials having the effect described above, such effect is provided that characteristics, such as electrical conductivity and mechanical strength on the basis of the presence of the carbons may be enjoyed.

According to the invention (25), such effect is provided that carbon nanotubes usually present in a form called as "bundle" may be present as singly discrete.

According to the invention (26), since the object composing the fine carbon dispersion object is made of a material which liberates the fine carbons under predetermined conditions, such effect is provided that such a material may be excluded from the final product when the inclusion of the material in the final product is unfavorable. Further, with respect to certain liquid mediums, it is difficult to initially disperse fine carbons, in which cases, it is extremely useful as a material for dispersing the fine carbons in the liquid medium.

According to the invention (27), aramid fibers excellent in heat resistance and strength in which fine carbons are uniformly dispersed can be produced.

According to the inventions (28) and (31), since carbon nanotubes that are particularly useful among fine carbons are dispersed in a non-aqueous solvent, such effect is provided that they may be extremely useful in dispersing the carbon nanotubes in an object, when use of a non-aqueous solvent is essential in a process for producing the object.

According to the inventions (29), (32) and (33), since carbon nanotubes that are particularly useful among fine carbons are dispersed in an aqueous solvent, such effect is provided that they may be extremely useful in dispersing the carbon nanotubes in an object, when use of an aqueous solvent is essential in a process for producing the object.

According to the invention (30), such effect is provided that it may be very useful as a raw material for dispersing fine carbons in an object.

According to the inventions (34) and (35), since a substance for promoting and/or maintaining unbundled state of the fine carbons is contained, such effect is provided that, when a dispersant that is unlikely to be dispersed or tends to recombine is used, such problems may be avoided.

According to the inventions (36) to (39), since fine carbons that are present as bundled are separated from each other through electrical attraction, such effect is provided that more highly dispersed state may be guaranteed.

### BRIEF DESCRIPTION OF THE DRAWINGS

Fig. 1 shows SEM (1A) and TEM (1B) images of carbon nanofibers (CNF) synthesized by CVD. SEM (Hitachi 4800) was operated at 15 kV and TEM (Hitachi H-800) was operated at 200 kV.
Fig. 2 shows a photograph of a 100 ml vial containing 100 ml of an aqueous solution comprising aqueous CNF/Na-ALG solution. The CNF and Na-ALG had concentrations of 0.5 mg/ml and 20 mg/ml, respectively.
Fig. 3 shows UV-vis spectra for an aqueous CNF/Na-ALG colloidal solution (CNF 0.5 mg/ml, Na-ALG 20 mg/ml) (upper line) and an aqueous solution containing only Na-ALG (Na-ALG 20 mg/ml) (lower line).
Fig. 4 shows zeta potential (ζ) plotted against pH of an aqueous CNF/Na-ALG colloidal solution (CNF 0.5 mg/ml, Na-ALG 20 mg/ml) and an aqueous solution containing only Na-ALG (Na-ALG 20 mg/ml).
Fig. 5 illustrates three molecular forms available to alginic acid, namely alginic acids of homopolymer M-M-M and G-G-G linkages as well as heteropolymer M-G-M linkage.
Fig. 6 shows FT-IR spectra for a solid-state Na-ALG (upper line) and an Na-ALG/CNF composite (lower line) with the use of potassium bromide (KBr) pelletizing.
Fig. 7 shows a microscopic observation of Ba²⁺-alginic acid-coated microsomes containing highly dispersed CNF. The microsomes were produced by using an aqueous colloidal solution containing 0.5 mg/ml CNF and 20 mg/ml Na-ALG as a gelling solution and an aqueous solution containing 100 mM BaCl₂ as a gelatinizing solution.
Fig. 8 shows UV-vis absorption of an aqueous solution containing 30 uM ethidium bromide (line A), 15 ml of the 30 uM ethidium bromide solution in mixture with Ba²⁺-alginic acid microsomes (reference microsomes, line B) and microsomes containing highly dispersed CNF (line C) after 10 minutes from solution/microsome mixing.
Fig. 9 shows variations in concentration of ethidium ions as a function of mixing time, after 10 ml of an aqueous solution containing 30 uM ethidium bromide was mixed with 15 ml of reference (Ba²⁺-ALG) microsomes (upper line) and with CNF/Ba²⁺-ALG microsomes (lower line).
Fig. 10 shows a microscopic photograph of Ba²⁺-ALG/MWCNT composite beads. Beads having a diameter of from 400 to 900 micrometers were observed.
Fig. 11 shows GC-MS measurement/identification results of targeted compounds extracted from a remover column using hexane. Retention times of BP, DF and DD were 4.12, 5.02 and 5.29 minutes, respectively. Column: DB-5MS (30 m in length, 0.25 mm in inner diameter and 0.25 µm in film thickness). MS spectra correspond to each peak of BP, DF and DD.
Fig. 12 shows an SEM photograph of aramid fibers in which SWCNT are dispersed in Production Example 8.
Fig. 13 conceptually illustrates CNT separation mechanism when a zwitterionic surface active agent is used.
Fig. 14 shows an AFM photograph of SWCNT at a concentration of 0.25 mg/ml produced according to Production Example 1.
Fig. 15 shows an AFM photograph of SWCNT at a concentration of 0.25/10 mg/ml produced according to Production Example 1.
Fig. 16 shows an AFM photograph of SWCNT at a concentration of 0.25/30 mg/ml produced according to Production Example 1.
Fig. 17 shows an AFM photograph of MWCNT at a concentration of 10 µg/ml produced according to Production Example 1.

### BEST MODE FOR CARRYING OUT THE INVENTION

Best modes for carrying out the invention will be described below. In the description below, first, a gel-like fine carbon dispersion object that is obtained by crosslinking fine carbon dispersion liquid per se will be described as a first of the best modes. Next, as a second of the best modes, a fine carbon dispersion object that is obtained by using fine carbon dispersion liquid will be described. Finally, description will be made on fine carbon-dispersed products that are obtained by using fine carbon dispersion object (mediator substance). The present invention is not to be limited to these best modes.

### First of the Best Modes

The fine carbon dispersion object according to a first of the best modes will be described below by way of example of applications as an absorbent for harmful substances in water. In such applications, a solvent in the gel should preferably be water. Also, in producing the gel, water should efficiently be used as a "liquid medium" for a carbon-dispersed liquid medium from the beginning instead of performing solvent exchange at a subsequent step. Further, assumption is made that carbon nanotubes (CNT) are used as nano- to micro-sized carbons. Under this premise, the best mode is described for constitutional features of the best mode.

First, dispersants contained in an aqueous CNT solution will be described. Dispersants suitable for dissolving CNT are surface active agents (solubilizing agents). Such surface active agents (micelle type) are those capable of forming globular micelles having a diameter of from 50 to 2,000 nm in an aqueous solution and/or water-soluble macromolecules (pseudomicelle type) having a weight average molecular weight of from 10,000 to 50,000,000. The pseudomicelle types are to be encompassed herein in the concept of "surface active agent."

Here, "surface active agents (micelle type)" are those capable of forming globular micelles having a diameter of from 50 to 2,000 nm (preferably from 50 to 300 nm) in an aqueous solution. Reasons for the suitability of globular micelles (microsomes) of these sizes are not clear; however, the following assumptions can be made at the moment. For example, carbon nanotubes usually have a length in the range of from 100 to 1,000 nm. In an aqueous solution of the surface active agent (micelle type), the carbon nanotubes will be folded to a fraction of their length (for example, to the order of one-fourth of their length) so that they may have a length of from several tens of nanometers to several hundreds of nanometers in the solution. It is presumably understood that the above sizes are appropriate for housing such folded carbon nanotubes in the microsomes, with a result that the carbon nanotubes can efficiently be solubilized. It is also assumed for other nanocarbons that they may be housed in micelles according to a similar mode of action.

There has previously been a technique in which a surface active agent is added (Japanese Unexamined Patent Publication No. 2002-255528). The micelles formed by this technique, however, are very small in the order of 0.1 nm and the principle of the technique is such that carbon nanotubes will adhere to the surfaces of the micelles. This best mode is based upon a new concept that nanocarbons (for example, carbon nanotubes) are housed within micelles (microsomes) instead of adhering to the surfaces of the micelles.

Here, "globular micelles" ("microsomes") are micelles formed by a surface active agent, which have globular housing space. For example, in the case of phospholipid-based surface active agents, such microsomes are called "liposomes". A diameter of the globular micelle (microsome) refers to a value as determined according to a light scattering method (pH-unadjusted aqueous solution at 20°C).

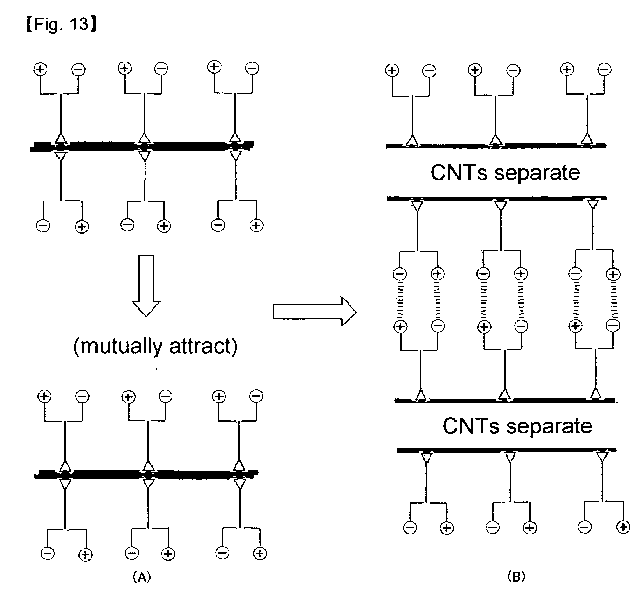

Surface active agents which may be used are not particularly specified in kind as long as they have the above-specified characteristics. For example, both phospholipid-based surface active agents and non-phospholipid-based surface active agents may be used. Particularly preferable surface active agents are zwitterionic surface active agents. Fig. 13 schematically shows the CNT separation mechanism with the use of a zwitterionic surface active agent. First, as shown in Fig. 13 (A), the zwitterionic surface active agent attaches to CNT. Then, as shown in Fig. 13 (B), anions and cations of the zwitterionic surface active agent attached to the CNT attract cations and anions of the zwitterionic surface active agent attached to another CNT respectively through their attractive forces (dual force) so that the CNT will be pulled, with a result that they assume singly separated unbundled state from the bundled state. Here, illustration is made with reference to an embodiment in which a zwitterionic surface active agent having an anion and a cation in one molecule is used as a dispersant; however, a CNT solution with an added anionic surface active agent (first solution) may be mixed with another CNT solution with an added cationic surface active agent (second solution) to form unbundled state on the basis of the electrical attraction described above.

Here, "phospholipid-based surface active agent" means an anionic or zwitterionic surface active agent having a phosphate group as a functional group, which may be of either a phospholipid (including both glycerophospholipid and sphingophospholipid) or a modified phospholipid (for example, hydrogenated phospholipid, lysophospholipid, enzyme-converted phospholipid, lysophosphatidylglycerol or a composite with other substances). Such phospholipids are found in various membrane systems of organism-composing cells, such as protoplasmic membranes, nuclear membranes, microsome membranes, mitochondrial membranes, Golgi cell membranes, lysosomal membranes, chloroplast envelopes and bacterial cell membranes. Preferably, phospholipids used for liposome preparation are preferable. Specific examples include phosphatidylcholines [such as distearoylphosphatidylcholine (DSPC), dimyristoylphosphatidylcholine (DMPC) and dipalmitoylphosphatidylcholine (DPPC)], phosphatidylethanolamine, phosphatidylinositol, phosphatidylserine, phosphatidylglycerol, diphosphatidylglycerol, lysophosphatidylcholine and sphingomyelin.

Also, "non-phospholipid-based surface active agent" means an nonionic or zwitterionic surface active agent not containing a phosphate group as a functional group, examples of which include 3-[(3-cholamidopropyl)dimethylamino]-2-hydroxy-1-propanesulfonate (CHAPSO), 3-[(3-cholamidopropyl)dimethylamino]-propanesulfonate (CHAP) and N,N-bis(3-D-gluconamidopropyl)-cholamide.

For reference, zwitterionic surface active agents will be listed. The tables below present, in order of mention, quaternary ammonium base/sulfonate group types, quaternary ammonium base/phosphate group types (water-soluble), quaternary ammonium base/phosphate group types (water-insoluble) and quaternary ammonium base/carboxyl group types, along with their nomenclatures and suppliers.

**Table 1**

| Nomenclature | molecular formula | manufacturer |
|---|---|---|
| CHAPS | C₃₂H₅₈N₂O₇S | Dojindo |
| CHAPSO | C₃₂H₅₈N₂O₈S | as above |
| n-Octadecyl-N,N'-dimethyl-3-ammonio-1-propanesulfonate | C₁₃H₂₉NO₃S | Sigma |
| n-Decyl-N,N'-dimethyl-3-ammonio-1-propanesulfonate | C₁₅H₃₃NO₃S | as above |
| n-Dodecyl-N,N'-dimethyl-3-ammonio-1-propanesulfonate | C₁₇H₃₇NO₃S | as above |
| n-Tetradecyl-N,N'-dimethyl-3-ammonio-1-propanesulfonate (Zwittergent-3-14) | C₁₉H₄₁NO₃S | Fluka |
| n-Hexadecyl-N,N'-dimethyl-3-ammonio-1-propanesulfonate | C₂₁H₄₅NO₃S | as above |
| n-Octadecyl-N,N'-dimethyl-3-ammonio-1-propanesulfonate | C₂₃H₄₉NO₃S | as above |
| Ammonium Sulfobetaine-1 | C₂₁H₄₄N₂O₄S | Joanne Chimera |
| Ammonium Sulfobetaine-2 | C₂₇H₅₆N₂O₄S | as above |
| Ammonium Sulfobetaine-3 | C₂₂H₄₆N₂O₄S | as above |
| Ammonium Sulfobetaine-4 | C₂₈H₅₈N₂O₄S | as above |

**Table 2**

| Nomenclature | molecular formula | manufacturer |
|---|---|---|
| n-Octylphosphocholine | C₁₃H₃₀NO₄P | Anatrace |
| n-Nonylphosphocholine | C₁₄H₃₂NO₄P | as above |
| n-Decylphosphocholine | C₁₅H₃₄NO₄S | as above |
| n-Dodecylphosphocholine | C₁₇H₃₈NO₄P | as above |
| n-Tetradecylphosphocholine | C₁₉H₄₂NO₄P | as above |
| n-Hexadecylphosphocholine | C₂₁H₄₆NO₄P | as above |

**Table 3**

| Nomenclature | chain carbon number | manufacturer |
|---|---|---|
| Dilauroylphosphatidylcholine | 12:0 | Funakoshi |
| Dimyristoylphosphatidylcholine | 14:0 | as above |
| Dipalmitoylphosphatidylcholine | 16:0 | as above |
| Distearoylphosphatidylcholine | 18:0 | as above |
| Dioleoylphosphatidylcholine | 18:1 | as above |
| Dilinoleoylphosphatidylcholine | 18:2 | as above |

**Table 4**

| trade name | composition | manufacturer |
|---|---|---|
| NISSANANON BF | dimethylalkylebetaine | NOF |
| NISSANANON BL | dimethylalkyl(lauryl)betaine | as above |
| NISSANANON BDC-SF | amidobetaine | as above |
| EF-700 | perfluoroalkylbetaine | Tohkem Products |

Next, "water-soluble macromolecules (pseudomicelle type)" refer to those having a weight average molecular weight of from 10,000 to 50,000,000 (preferably from 10,000 to 5,000,000). Weight average molecular weights here are based on values as determined by gel permeation high performance liquid chromatography using pullulan as the standard.

The above water-soluble macromolecules are not particularly specified as long as they have the above-specified molecular weights, examples of which include compounds selected from various vegetable-based surface active agents, water-soluble polysaccharides, such as alginates, for example, alginic acid, propylene glycol alginate, gum arabic, xanthan gum, hyaluronic acid, chondroitin sulfate, water-soluble celluloses, such as cellulose acetate, hydroxymethyl cellulose, methyl cellulose, hydroxypropyl methyl cellulose, chitosan, chitin; water-soluble proteins, such as gelatin, collagen; polyoxyethylene-polyoxypropylene block copolymer; and DNA.

Here, "---s" in alginates and water-soluble celluloses means their derivatives having common basic skeletons with alginic acid and cellulose and exhibiting water solubility (such as their salts, esters and ethers).

Next, the aqueous CNT solution according to this best mode will be described. With respect to the content of a surface active agent in the aqueous solution, for the micelle type, the content must be equal to or higher than the critical concentration of the micelles forming microsomes. Usually, the content is from 0.2 to 10 mmol per liter of an aqueous solution for 1 g of a crude product. For the pseudomicelle type, the content of a water-soluble macromolecule is not particularly specified. Usually, the content is from 5 to 50 g per liter of an aqueous solution for 1 g of a crude product. Also, with respect to solubilizing conditions, for the micelle type, nanocarbons (such as carbon nanotubes) are initially raveled out with ultrasonic waves for approximately five minutes in order to completely dissolve them. Then, they will be dissolved completely in approximately six hours at room temperature or in a few minutes with heating at 60°C. Also, for the pseudomicelle type, a mixture comprising a pseudomicelle former (such as sodium alginate), a permeabilizer (such as lithium hydroxide), an oxidizing agent (such as sodium persulfate), nanocarbons and deionized water is thoroughly diffused and dispersed before leaving it at rest at 40°C for approximately one day. When no permeabilizers or oxidizing agents are used, it is left at rest at 40°C for approximately one week.

Next, crosslinking agents in this best mode will be described. In this best mode, a surface active agent has a crosslinkable group. For example, an alginate has a carboxylate group in the molecule, which forms a chelate structure with a polyvalent cation to thereby crosslink to form a gel. Here, a polyvalent cation means a cation having two or more valences, preferably a metal ion having two or more valences, and more preferably a bivalent metal ion, such as barium, calcium, magnesium, lead, copper, strontium, cadmium, zinc, nickel, cobalt, manganese or iron ion. It has been reported that the tendency for polyvalent ions to cause gelling is in the order of barium < lead < copper < strontium < cadmium < calcium < zinc < nickel < cobalt < manganese < iron < magnesium. Ion exchange increases stepwise with the increase in valence of exchanged ions. Therefore, when an aqueous solution containing polyvalent cations (such as barium ions) is added to an aqueous solution of an alginate (such as sodium alginate), ion exchange will rapidly occur to form a gel of the alginate and the polyvalent cations.

Detailed description will be made below on two of more preferable surface active agents among the best modes. A first of the best modes is a bead-like or fiber-like gel using alginic acid as a surface active agent (+ a gelling agent). A second of the best modes is a film-like gel using methyl cellulose as a surface active agent (+ a gelling agent).

The first mode is a bead-like or fiber-like gel which adopts a double structure made of inner and outer layers, wherein the inner layer is an aqueous solution of carbon nanotubes and the outer layer is a hydrogel including carbon nanotubes in a network structure. This best mode will be described in detail below.

First, the aqueous solution of carbon nanotubes present in the inner layer will be described. The aqueous solution contains carbon nanotubes and a surface active agent as a dispersant for the carbon nanotubes. Each of them will be described in detail below.

Carbon nanotubes usable in this best mode are not particularly specified and may be any of those as produced by syntheses including electrical discharge (C. Journet et al., Nature 388, 756 (1997) and D. S. Bethune et al., Nature 363, 605 (1993)), laser vapor deposition (R. E. Smally et al., Science 273, 483 (1996)), gaseous synthesis (R. Andrews et al., Chem. Phys. Lett., 303, 468, 1999), thermochemical gaseous vapor deposition (W. Z. Li et al., Science, 274, 1701 (1996), Shinohara et al., Jpn. J. Appl. Phys. 37, 1257 (1998)), plasma chemical gaseous vapor deposition (Z. F. Ren et al., Science. 282, 1105 (1998)) and the like.

It is preferable to treat a crude product with an acid when a metal catalyst has been used for its synthesis in order to remove the metal catalyst. For acid treatment, a procedure as described in Japanese Unexamined Patent Publication No. 2001-26410 may be mentioned, in which a solution of nitric acid or hydrochloric acid is used as an aqueous acid solution, being diluted fifty-fold with water in either case. After such acid treatment, the crude product is washed and filtered to make an aqueous solution of carbon nanotubes.

Surface active agents usable for this mode are of the micelle type and pseudomicelle type described above and are, particularly preferably, alginates. Preferable contents of alginates in the aqueous solution are not particularly specified, but are usually from 5 to 50 g per liter of the aqueous solution for 1 g of the crude product.

Further, it is preferable that initially an aqueous solution of carbon nanotubes usable in this mode further contains a nanocarbon-permeating substance and an oxidizing agent and is in the form of an alkaline aqueous solution. Here, "initially" means that such components or conditions are not essential when the solution has finally been rendered bead-like or fiber-like. In other words, such components and conditions are added and adjusted respectively in order to remove unnecessary components present in the system when the crude product described above is used as a source of carbon nanotubes. These components will then be described below.

First, "nanocarbon-permeating substance" means a substance having a diameter which is smaller than the C-C lattice size of a carbon nanotube. As a nanotube-permeating cation having such a diameter (ion diameter), a lithium ion may be mentioned as a specific example. A hydrogen ion is smaller than the lattice size, but is lost in water in the form of an oxonium ion and is therefore unsuitable as a carbon nanotube-permeating cation. The role of such a carbon nanotube-permeating substance is not revealed as of now. It is however assumed in case of a carbon nanotube-permeating cation, for example, that it is responsible for altering the charge state within the carbon nanotube and displacing impurities on the surface of the interior of the carbon nanotube and inside the carbon nanotube by pervading through the carbon nanotube. The content of such a carbon nanotube-permeating substance is preferably from 0.1 to 1 mol per liter of an aqueous solution for 1 g of a crude carbon nanotube product.

Next, oxidizing agents will be described. Usable oxidizing agents are not particularly specified. Nevertheless, persulfates (persulfate ions in a solution) are preferable because persulfates are alkaline and highly active and converted to sulfuric acid after being oxidized, which makes them easy to posttreat.

Next, pH will be described. It is preferable that the pH ranges from 6 to 14 (preferably alkaline). Reasons for suitability of a liquid being in this range are not clear. It is however presumably responsible for altering the electronic state on the surface of a nanocarbon and, for a carbon nanotube, for softening the surface of the carbon and folding the carbon nanotube. Preferably, the pH ranges from 10 to 14 for the micelle type and from 6 to 12 for the pseudomicelle type.

Further, it is important to initially maintain the pH in the alkaline range for another reason. Alginic acid as a solubilizing agent for carbon nanotubes is insoluble in water in the neutral to acidic range, but will be a highly viscous aqueous solution under alkaline conditions. As such, in order to allow more alginic acid to be contained in a solution of carbon nanotubes, alkaline conditions are preferable for liquids.

Depending on applications, metals and other impurities as residues in producing carbon nanotubes as well as carbon nanotube-permeating substances for removing them, oxidizing agents and reduced products of such oxidizing agents may remain and pH may be in the alkaline range, in which cases, an aqueous solution of carbon nanotubes in a bead-like or fiber-like gel as a final product may be in the alkaline range even with such components and the like remaining as they are.

Next, a hydrogel as an outer layer including carbon nanotubes in a network structure will be described. Such network structures are not particularly specified as long as they include water and carbon nanotubes. It is however preferable that they are made by crosslinking a solubilizing agent for carbon nanotubes in the inner layer, for the ease of production and the affinity with an aqueous solution of carbon nanotubes in the inner layer and the like. Specific preferred example is a crosslinked product of alginic acid. In this case, crosslinking should preferably be chelation crosslinking, crosslinking agents for which include polyvalent cations (such as, barium and calcium ions).

The hydrogel of the outer layer should preferably contain carbon nanotubes. Since the hydrogel has excellent permeability, however, even if carbon nanotubes are not include in the outer layer, substances present on the outside will infiltrate into the interior (inner layer) to be adsorbed by the carbon nanotubes when, for example, the bead-like gel according to this best mode is used as an adsorbent.

A bead-like or fiber-like gel of two-layer structure as described above may be produced according to the procedure to be described below. First, an aqueous solution containing a gelling agent (bivalent ion, such as barium ion) for the gelled product (alginic acid) is prepared. In doing so, the gelling agent is adjusted in concentration to be sufficient for crosslinking all the crosslinkable groups of alginic acid used. Then, the aqueous solution of carbon nanotubes is added dropwise or flow-wise to an aqueous solution of the gelling agent using, for example, a dropping device, an injector and the like to be used for preparing pharmaceuticals. Then, portion of the aqueous solution of carbon nanotubes that is brought into contact with the aqueous solution of the gelling agent will immediately undergo crosslinking reaction to gel, so that a bead-like or fiber-like gel in which non-contacted portion of the aqueous solution of carbon nanotubes is confined may be obtained.

Next, a second of the modes, that is, a dried product (dried gel, resin, sheet-like dried product) of a film-like gel in which carbon nanotubes are included will be described. Usable carbon nanotubes and the like are the same as the first mode, so that description of the overlapped portion will be dispensed with.

Surface active agents of the pseudomicelle type composing a film-like gel should preferably be water-soluble celluloses, such as hydroxymethyl cellulose and methyl cellulose, in view of guaranteeing sufficient strength even in the form of a thin, film-like dried gel. Also, crosslinking should preferably be chelation crosslinking or hydrogen bond crosslinking and, when methyl cellulose is used as a gelling material, a crosslinking agent should preferably be a polyvalent ion (such as barium ion).

The dried gel of this mode is a dried product of the gel described above. Here, the degree of dryness (content of solvents) is not specified, but, when it is applied for air filters, the content of solvents should preferably be lower. Also, thickness varies depending on applications, typically ranging from 0.1 to 3 mm for the applications described above.

A film-like dried gel as described above may be produced according to the procedure to be described below. First, an aqueous solution containing a gelling agent (bivalent metal ion, such as barium ion) for the gelled product (methyl cellulose) is prepared. In doing so, the gelling agent is adjusted in concentration to be sufficient for crosslinking all the crosslinkable groups of methyl cellulose used. Then, the solution of carbon nanotubes containing methyl cellulose is applied to a plate, rendered film-like with a coater, before drying the film-like solution. Then, when an aqueous solution of the gelling agent is evenly applied to the film-like dried product, the dried product will absorb the aqueous solution and simultaneously undergo crosslinking reaction so that a methyl cellulose hydrogel including carbon nanotubes may be obtained. Thereafter, the gel is dried according to a well-known method to obtain a film-like dried gel as described above.

### Second of Best Modes

A second of the best modes will be detailed below. In the description below, first, carbon nanotube dispersion liquid for producing composite materials in which carbon nanotubes are uniformly dispersed (referred to below as "dispersion liquid for producing composite materials") will be described, among which novel ones will in particular be described in detail. Then, methods for uses of such dispersion liquid for producing composite materials (in other words, processes for producing "composite materials in which carbon nanotubes are uniformly dispersed") will be described. Finally, such composite materials will be described.

The dispersion liquid for producing composite materials are a liquid medium in which carbon nanotubes are dispersed by the use of a dispersant for carbon nanotubes.

Here, usable CNT are not particularly specified and may be any of those as produced by syntheses including electrical discharge (C. Journet et al., Nature 388, 756 (1997) and D. S. Bethune et al., Nature 363, 605 (1993)), laser vapor deposition (R. E. Smalley et al., Science 273, 483 (1996)), gaseous synthesis (R. Andrews et al., Chem. Phys. Lett., 303, 468, 1999), thermochemical gaseous vapor deposition (W. Z. Li et al., Science, 274, 1701 (1996), Shinohara et al., Jpn. J. Appl. Phys. 37, 1257 (1998), plasma chemical gaseous vapor deposition (Z. F. Ren et al., Science. 282, 1105 (1998)) and the like.

It is preferable to treat a crude product with an acid when a metal catalyst has been used for its synthesis in order to remove the metal catalyst. For acid treatment, a procedure as described in Japanese Unexamined Patent Publication No. 2001-26410 may be mentioned, in which a solution of nitric acid or hydrochloric acid is used as an aqueous acid solution, being diluted fifty-fold with water in either case. After such acid treatment, the crude product is washed and filtered to obtain CNT substantially free of metal catalysts.

Next, liquid mediums will be selected depending on applications. Examples of non-aqueous liquid mediums include aliphatic or aromatic hydrocarbons, such as those having from 5 to 12 carbons, for example, pentane, hexane, heptane, octane, nonane, decane, dodecane, isooctane, benzene, toluene, xylene, cyclopentane, cyclohexane and methylcyclopentane. In addition to uses as alone, they may be used as a mixture of two or more. Also, examples of aqueous liquid mediums include water, water-miscible organic solvents or mixed solvents thereof. Examples of water-miscible organic solvents include alcohols, ethers, esters and ketones, various carbonyl compounds, such as methanol, ethanol, propanol, dioxane, dimethylformamide, acetone, methyl ethyl ketone and methyl acetate.

When a non-aqueous liquid medium is selected as a liquid medium, a preferable dispersant for CNT is a fullerene. A structure in which a fullerene is intercalated in an opening between two CNT has been observed in a non-aqueous liquid medium. It is believed that CNT will disperse in a stable manner in a liquid by such configuration. An amount of a fullerene to be added should preferably be from 15 to 30 % in relation to the total amount of added CNT.

When an aqueous liquid medium is selected as a liquid medium, a first preferable dispersant for CNT is a surface active agent capable of forming globular micelles having a diameter of from 50 to 2,000 nm in the liquid medium or a water-soluble macromolecule having a weight average molecular weight of from 10,000 to 50,000,000. Reasons for the suitability of globular micelles (microsomes) of these sizes are not clear; however, the following assumptions can be made at the moment. For example, CNT usually have a length in the range of from 100 to 1,000 nm. In an aqueous solution of the surface active agent (micelle type), the CNT will be folded to a fraction of their length (for example, to the order of one-fourth of their length) so that they may have a length of from several tens of nanometers to several hundreds of nanometers in the solution. It is presumably understood that the above sizes are appropriate for housing such folded carbon nanotubes in the microsomes, with a result that the carbon nanotubes can efficiently be solubilized.

Surface active agents are not particularly specified in kind as long as they have the above-specified characteristics. For example, both phospholipid-based surface active agents and non-phospholipid-based surface active agents may be used.

Here, "phospholipid-based surface active agent" means an anionic or zwitterionic surface active agent having a phosphate group as a functional group, which may be of either a phospholipid (including both glycerophospholipid and sphingophospholipid) or a modified phospholipid (for example, hydrogenated phospholipid, lysophospholipid, enzyme-converted phospholipid, lysophosphatidylglycerol or a composite with other substances). Such phospholipids are found in various membrane systems of organism-composing cells, such as protoplasmic membranes, nuclear membranes, microsome membranes, mitochondrial membranes, Golgi cell membranes, lysosomal membranes, chloroplast envelopes and bacterial cell membranes. Preferably, phospholipids used for liposome preparation are preferable. Specific examples include phosphatidylcholines [such as distearoylphosphatidylcholine (DSPC), dimyristoylphosphatidylcholine (DMPC) and dipalmitoylphosphatidylcholine (DPPC)], phosphatidylethanolamine, phosphatidylinositol, phosphatidylserine, phosphatidylglycerol, diphosphatidylglycerol, lysophosphatidylcholine and sphingomyelin.

Also, "non-phospholipid-based surface active agent" means a nonionic or zwitterionic surface active agent not containing a phosphate group as a functional group, examples of which include 3-[(3-cholamidopropyl)dimethylamino]-2-hydroxy-1-propanesulfonate (CHAPSO), 3-[(3-cholamidopropyl)dimethylamino]-propanesulfonate (CHAP) and N,N-bis(3-D-gluconamidopropyl)-cholamide.

Further, examples of water-soluble macromolecules include compounds selected from various vegetable-based surface active agents, water-soluble polysaccharides, such as alginates, for example, alginic acid, propylene glycol alginate, gum arabic, xanthan gum, hyaluronic acid, chondroitin sulfate, water-soluble celluloses, such as cellulose acetate, hydroxymethyl cellulose, methyl cellulose, hydroxypropyl methyl cellulose, chitosan, chitin; water-soluble proteins, such as gelatin, collagen; polyoxyethylene-polyoxypropylene block copolymer; and DNA.

Here, alginates and water-soluble celluloses are in plural form since they include their derivatives having common basic skeletons with alginic acid and cellulose and exhibiting water solubility (such as their salts, esters and ethers).

With respect to the content of a surface active agent in an aqueous solution, for the micelle type, the content must be equal to or higher than the critical concentration of the micelles forming microsomes. Usually, the content is from 0.2 to 10 mmol per liter of an aqueous solution for 1 g of a crude product. Also, for the pseudomicelle type, the content of a water-soluble macromolecule is not particularly specified. Usually, the content is from 5 to 50 g per liter of an aqueous solution for 1 g of a crude product. Also, with respect to solubilizing conditions, for the micelle type, CNT are initially raveled out with ultrasonic waves for approximately five minutes in order to completely dissolve them. Then, they will be dissolved completely in approximately six hours at room temperature or in a few minutes with heating at 60°C. Also, for the pseudomicelle type, a mixture comprising a pseudomicelle former (such as sodium alginate), a permeabilizer (such as lithium hydroxide), an oxidizing agent (such as sodium persulfate), CNT and deionized water is thoroughly diffused and dispersed with a homogenizer for example, before leaving it at rest at 40°C for approximately one day. When no permeabilizers or oxidizing agents are used, it is left at rest at 40°C for approximately one week.

Particularly preferable one among first preferable dispersants for CNT are alginates. Contents of alginates in the dispersion liquid are not particularly specified, but are usually from 5 to 50 g per liter of the aqueous solution for 1 g of the crude product.

Further, it is preferable that CNT dispersion liquid of the micelle type further contains a CNT-permeating substance and an oxidizing agent and is in the form of an alkaline aqueous solution. Here, "CNT-permeating substance" means a substance having a diameter which is smaller than the C-C lattice size of CNT. As a CNT-permeating cation having such a diameter (ion diameter), a lithium ion may be mentioned as a specific example. A hydrogen ion is smaller than the lattice size, but is lost in water in the form of an oxonium ion and is therefore unsuitable as a CNT permeating cation. The role of such a CNT-permeating substance is not revealed as of now. It is however assumed in case of a CNT-permeating cation, for example, that it is responsible for altering the charge state within the CNT and displacing impurities on the surface of the interior of the CNT and inside the CNT by pervading through the CNT. The content of such a CNT-permeating substance is preferably from 0.1 to 1 mol per liter of an aqueous solution for 1 g of a crude CNT product. Also, usable oxidizing agents are not particularly specified. Nevertheless, persulfates (persulfate ions in a solution) are preferable because persulfates are alkaline and highly active and converted to sulfuric acid after being oxidized, which makes them easy to aftertreat. Further, it is preferable that the pH ranges from 6 to 14 (preferably alkaline). Reasons for suitability of a liquid being in this range are not clear. It is however presumably responsible for altering the electronic state on the surface of CNT and, in addition, for softening the surface of the CNT and folding the CNT. Preferably, the pH ranges from 10 to 14 for the micelle type and from 6 to 12 for the pseudomicelle type. In addition, it is important to initially maintain the pH in the alkaline range for another reason. Alginic acid as a dispersant for CNT is insoluble in water in the neutral to acidic range, but will be a highly viscous aqueous solution under alkaline conditions. As such, in order to allow more alginic acid to be contained in an aqueous solution of CNT, alkaline conditions are preferable for liquids.

When an aqueous liquid medium is selected as a liquid medium, a second preferable dispersant for CNT is a cyclodextrin and fullerene. Cyclodextrins usable here may be any of the α-type having six glucose residues, the β-type having seven glucose residues, and the γ-type having eight glucose residues as well as other cyclodextrins such as branched cyclodextrins and modified cyclodextrins such as maltosylcyclodextrin and dimethylcyclodextrin or cyclodextrin polymers and the like. The mechanism in which CNT will be solubilized by these dispersants is supposedly that first, a cyclodextrin includes a hydrophobic fullerene and then the fullerene (hydrophobic) on the surface of the clathrate will bind to the CNT (hydrophobic) through affinity. The amount of a cyclodextrin to be added should preferably be from 150 to 300% in relation to the total amount of added CNT, and the amount of a fullerene to be added should preferably be from 15 to 30% in relation to the total amount of added CNT.

Next, methods for uses of such dispersion liquid for producing composite materials (in other words, processes for producing "composite materials in which carbon nanotubes are uniformly dispersed") will be described. Three types of methods for uses may be mentioned in general. A first method is by first dispersing raw material monomers in such dispersion liquid for producing composite materials, then polymerizing (and optionally crosslinking) the monomers by a well-known method and finally removing a liquid medium. This method is preferable for producing composite materials in the form of films and moldings.

A second method is by dispersing a raw material polymer in such dispersion liquid for producing composite materials, followed by removing a liquid medium. This method is preferable for producing composite materials in the form of films and moldings.

A third method is by immersing a raw material in such dispersion liquid for producing composite materials and raveling out the raw material before removing a liquid medium. Here, examples of procedures for raveling out include heat treatment and ultrasonification. This method is preferable for producing fiber-like composite materials.

Finally, composite materials in which carbon nanotubes are uniformly dispersed will be described. Such composite materials can be used in a variety of applications. For example, adsorbent materials may be mentioned. Here, substances to be adsorbed are not particularly specified and may be any substances contained in liquids and gases. In the case of liquid phase treatments, bleaching, dehydration or degumming of petroleum fractions (solvents, fuel oils, lubricants, waxes), elimination of odors, distastefulness and colors from supply water, bleaching of animal and vegetable oils, bleaching of crude syrup, clarification of beverages and medicated beverages, recovery of products such as vitamins from fermented liquids, purification of process liquid wastes for preventing water pollution (including ion exchange), elimination of salt and ash content from process water (including deionization by means of ion exchange, ion retardation, ion exclusion) and separation of aromatic hydrocarbons from aliphatic hydrocarbons may be mentioned for example. In the case of gas phase treatments, solvent recovery from the air exhausted from evaporation processes such as drying of paints, newspaper printing, dry cleaning of clothing or rayon spinning, dehydration of gases (including in-package drying), elimination of odors and toxic gases from ventilator systems or exhaust gases for preventing air pollution, separation of rare gases (krypton, xenon) at low temperatures, elimination of impurities from source air to low temperature separation, elimination of odors from gases for lightings in cities and adsorption of problem substances in gas phase separation of low molecular weight hydrocarbon gases (adsorption with reflux or substitute for low temperature separation) may be mentioned for example. In particular, they are useful as materials for adsorbing contaminants and harmful substances in liquids, gases and fume. Here, examples of such contaminants and harmful substances include hydrogen chloride, vinyl chloride, sodium hydroxide, tetrachloroethylene (solvent), BDBPP compounds (flameproofing agent), tributyltin compounds (anti-bacterial and anti-fungal agents), formaldehyde (resin finishing agent), organomercurous compounds (anti-bacterial and anti-fungal agents), dieldrin (mothproofing agent), sulfates (detergent), DTTB (mothproofing agent), potassium hydroxide (detergent), trichloroethylene (solvent), APO (flameproofing agent), TDBPP, methanol (solvent), triphenyltin compounds and so on. Further, they are useful as adsorbent materials for filtering systems for industrial and drinking waters, demineralizers, a variety of chromatography, systems for adsorbing substances harmful to human beings such as carcinogens, air cleaners and exhaust gas cleaners. Further, they are also useful as electrically conductive materials. For example, electronics, electrical appliances, mechanical parts and various components for vehicles and the like may be mentioned. In particular, for use in combination with a heat-resistant gel, materials for fuel cell separators may be mentioned as a preferable example. Further, they are useful as reinforced composite materials. For example, they are useful in applications for reinforced fibers, in particular, heat-resistant, reinforced fibers.

### Third of Best Modes

A third of the best modes will be detailed. In the description below, first, a carbon nanotube dispersion object for producing products in which carbon nanotubes are uniformly dispersed will be described. Next, methods for uses of the CNT dispersion object for producing such products (in other words, processes for producing "products in which carbon nanotubes are uniformly dispersed") will be described.

First, a CNT dispersion object for producing products is one in which CNT are uniformly dispersed on the surface of an object. Here, objects are not particular specified as long as they are capable of liberating CNT under predetermined conditions as described above.

**Table 5**

| predetermined conditions | object | mode of liberation | final product |
|---|---|---|---|
| concentrated sulfuric acid | ultrafine fiber | dissolution | aramid |
| high temperature | paraffin | fusion | polyester, aramid |
| high temperature | paraffin | combustion | aluminum filter |

Next, processes for producing the fine carbon dispersion object will be described. First, the object is added to the fine carbon-dispersed liquid medium. Next, production can be made by performing induced phase transfer treatment to transfer the object from the liquid medium side to the object side.

Next, methods for using the fine carbon dispersion object will be described with reference to a process for producing aramid fibers by way of example. First, in a process for producing aramid fibers, since aramid fiber materials need to be dissolved in concentrated sulfuric acid, such materials for objects must be chosen that may uniformly disperse CNT in the liquid by being dissolved in the concentrated sulfuric acid. As such objects, ultrafine fibers and higher paraffins should preferably be used. Then, when an object in which CNT are uniformly dispersed is introduced to the concentrated sulfuric acid in which the aramid fiber raw material is dissolved, the object will be dissolved to disperse the CNT in the concentrated sulfuric acid. As such, fibers are produced according to a well-known procedure to obtain aramid fibers in which the CNT are uniformly dispersed.

### EXAMPLES

The present invention will more specifically be demonstrated using Examples below. The present invention is not to be limited to Examples below.

### Example 1

### CNF synthesis

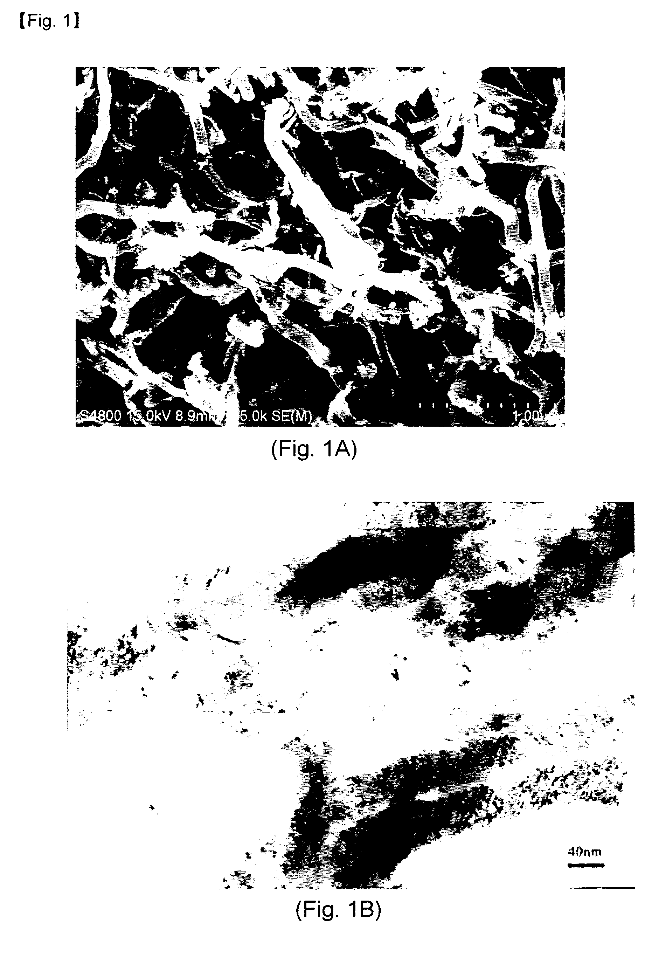

The carbon nanofibers (CNF) according to this example were synthesized by using chemical vapor deposition (CVD) according to the following procedures (N. M. Rodriguez, J. Mater. Res., 8, 3233 (1996)). Powdery Ni catalyst was placed on an Al₂O₃ plate, which was then placed in a quartz tube placed in a horizontal tube furnace, to reduce it with 10% hydrogen/helium vapor at 873 K for approximately two hours. Through reaction under atmospheric pressure at 873 K for four hours, growth of CNF was attained by decomposition of ethylene (C₂H₄/H₂ = 4:1). In order to dissolve the metal catalyst, soot, a thermal CVD product, was treated with 6.0 M HCl under reflux attached to the flask at 373 K for approximately 12 hours. Using a high pressure microsome extruder, the suspension was passed through two superposed polycarbonate filters having a pore diameter of 0.1 µm. The solid cake was thoroughly washed with deionized water before drying at 333 K for at least 24 hours. The obtained CNF were found to have a purity of higher than 90%. The diameter and length were in the range of from 50 to 300 mm and from 2 to 15 µm, respectively. Fig. 1 shows an SEM image (1A) and a TEM image (1B) of the CNF obtained. Platelet-like CNF in which 002 planes are stacked in the direction of the fiber axis and herringbone-like CNF in which 002 planes are distributed at an angle to the fiber axis on either side were observed.

### Preparation of aqueous CNF/alginic acid colloidal solution

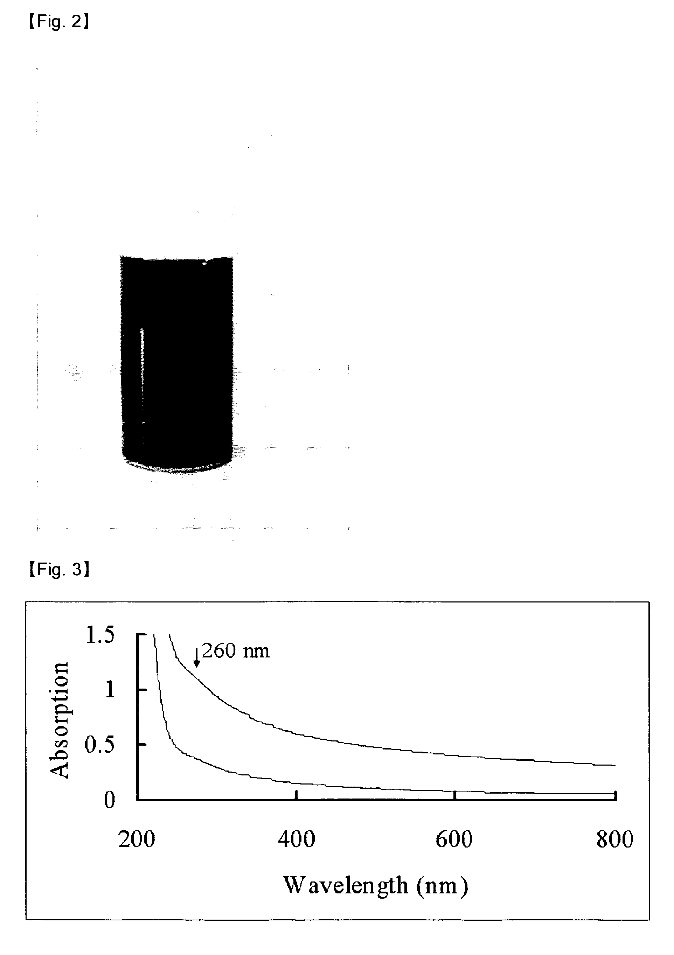

The sodium alginate according to this example (aqueous solution at 20°C containing 20 mg/ml of sodium alginate had viscosity and pH of from 300 to 400 cP and from 6.0 to 8.0 respectively) was obtained from Wako Chemicals Industries (Osaka). The sodium alginate (Na-ALG) was dissolved in deionized water to prepare an aqueous solution of Na-ALG CNF were added to the aqueous solution of Na-ALG and then fully mixed by a combination of high shear mixing and sufficient ultrasonification. The aqueous colloidal solution of CNF/Na-ALG was centrifuged at 4,000 rpm for 30 minutes and a slight amount of black precipitate separated from the aqueous solution was taken out from the aqueous colloidal solution. Fig. 2 shows a photograph of a 100 ml vial containing an aqueous colloidal solution of CNF/Na-ALG which contains 0.5 mg/ml CNF and 20 mg/ml Na-ALG. During three weeks of observation, precipitation from this aqueous colloidal solution was not observed. By using an aqueous solution containing 20 mg/ml sodium alginate as a dispersion solution, an aqueous colloidal solution of CNF/alginic acid having CNF up to a concentration of 1.0 mg/ml with high uniformity was obtained.

### Uniformity/stability testing

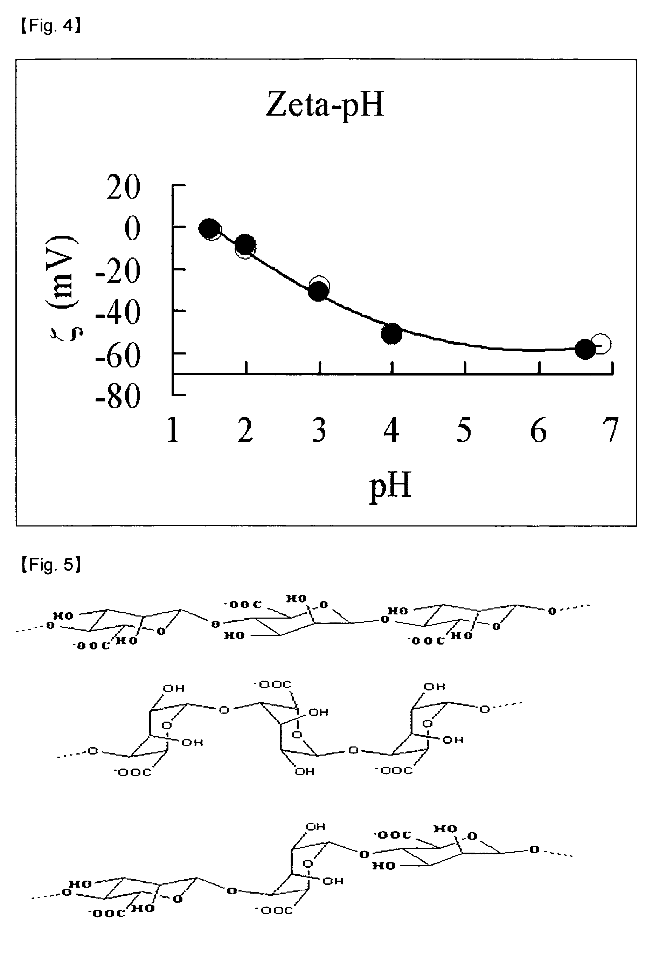

Using UV-vis as a detector system, linearity of calibration curves of CNF in a colloidal solution of CNF/Na-ALG was calculated to thereby determine uniformity of the aqueous colloidal solution of CNF/Na-ALG Characteristic absorption largely derived from the CNF dispersion is seen at wavelengths approximately from 220 to 500 nm (Fig. 3). The linearity r² of the calibration curve for CNF in the aqueous colloidal solution of CNF/Na-ALG at 260 nm was found higher than 0.9989, showing high uniformity of the colloidal solution of CNF/Na-ALG. Samples used for deriving the calibration curve were aqueous solutions of Na-ALG containing 0, 0.1, 0.2, 0.3, 0.4 and 0.5 mg/ml of CNF with a concentration ofNa-ALG in each sample fixed at 20 mg/ml. Stability of the CNF/Na-ALG colloid was determined by calculating CNF concentrations in relation to precipitation time according to a method similar to the one reported by Jiang (L. Jiang, L. Gao, J. Sun, J. Colloid and Interface Sci., 260, 89 (2003)). Variation in concentration of the CNF was found less than 0.4% at a long-term measurement for three weeks at room temperature. The zeta potential of the CNF/Na-ALG colloid is another essential parameter for determining stability of the colloidal solution. A colloidal solution of CNF/Na-ALG containing 0.5 mg/ml CNF and 20 mg/ml Na-ALG was prepared and analyzed using an electrophoretic light scattering spectrophotometer (ELS-8000, Otsuka Electronics) for zeta potential measurement. Zeta potential values ζ are calculated from particle velocity on the basis of Helmholtz-Smoluchowski equation: ζ = 4πµη/D wherein µ, η and D represent electrophoretic mobility, viscosity and dielectric constant of each boundary layer, respectively (H. E. Ries, Nature (London), 226, 72 (1970)). As seen from the plot of ζ against pH (Fig. 4), the highest ζ value for the CNF/Na-ALG colloid was found -58.03 mV, which also shows a high stability (repulsion) of the CNF/Na-ALG colloid. The plot of ζ against pH for the CNF/Na-ALG colloid (Fig. 4) is substantially identical to the plot of ζ against pH for an aqueous solution containing only Na-ALG (20 mg/ml), which shows that the zeta potential of the CNF/Na-ALG colloid is determined by alginate ions. For the both samples, a decrease in absolute value of ζ appears as a decrease in pH in all the tests for pH values (pH of the samples were adjusted with 1.0 M HCl). This implies that the alginic acid molecules were adsorbed by the CNF throughout the whole range of pH. Electrostatic repulsion generated between carboxyl groups of alginate ions (mostly adsorbed onto the surface of the CNF) decreases Van der Waals force attraction, with a result that the CNF/Na-ALG colloid is highly stabilized.

### FT-IR spectral shift

Alginic acid is a water-soluble 1,4-linked linear copolymer of β-D-mannuronic acid (M) and α-L-gluronic acid (G). M and G may be arranged, as shown in Fig.5, in homopolymer (poly(β-D-mannosylronate, M-M-M) and poly(α-L-glosylronate, G-G-G) blocks or may be arranged in a heteropolymer (M-G-M) block (N. P. Chandia, B. Matushiro, A. E. Vasquez, Carbohydrate Polymers, 46, 81 (2001)). In order to understand the mechanism in which an alginic acid/CNF composite is formed in an aqueous solution, FT-IR spectra of alginic acid (reference sample) and a CNF/alginic acid composite were determined. Characteristic bands typical for alginic acid are (i) 1627 and 1419 cm⁻¹ (characteristic bands typical for carboxylic acids), (ii) 808 cm⁻¹ (characteristic band for mannuronic acid) and/or 787 cm⁻¹ (characteristic band for gluronic acid), (iii) 940 cm⁻¹ (characteristic band for α1→4 linkage) and (iv) 904 cm⁻¹ (characteristic band for α-L-glopyranuron ring) (N. P. Chandia, B. Matushiro, A. E. Vasquez, Carbohydrate Polymers, 46, 81 (2001), H. Ronghua, D. Yumin, Y. Jianhong, Carbohydrate Polymers, 52, 19 (2003)). The characteristic bands for carboxylic acids of the alginic acid of the CNF/Na-ALG sample shift from 1627.63 and 1419.35 cm⁻¹ of the reference alginic acid sample to 1613.16 and 1413.57 cm⁻¹ of the CNF/Na-ALG sample. The characteristic band for α1→4 linkage of the alginic acid of the CNF/Na-ALG sample and the characteristic band for the α-L-glopyranuron ring shift from 947.84 and 890.95 cm⁻¹ of the reference alginic acid sample to 943.98 and 887.8 cm⁻¹ of the CNF/Na alginate sample, respectively. These shifts in the characteristic bands for the CNF/Na-ALG samples are a sign that alginic acid interacts with CNF. On the other hand, the characteristic band for mannuronic acid of the CNF/Na-ALG sample shifts from 811.88 cm⁻¹ of the reference alginic acid sample to 814.77 cm⁻¹. This increase in the mannuronic acid band is a sign that the sugar skeleton of alginic acid is the key portion responsible for forming alginic acid/CNF composites. Also, a characteristic band for gluronic acid was observed (also increased approximately 3 cm⁻¹) showing that the alginic acid used for this study is built by both M and G units.

### Biocompatibility study

Normal human fibroblasts (HF) were used as typical cells and purchased from Bio Whitteker. MTS cell growth assay kits were purchased from Promega. Dulbecco's modified Eagle's minimal essential medium (D-MEM), L-glutamine and fetal bovine serum (FBS) were purchased from Sigma. An aqueous colloidal solution of CNF/Na-ALG containing 1.0 mg/ml of CNF and 20 mg/ml ofNa-ALG was diluted with D-MEM containing 5% FBS and 50 µg/ml kanamycin to 1/10, 1/100 and 1/1000. Also, an aqueous solution containing only Na-ALG (20 mg/ml) (control medium) was diluted with the same medium and to the same extent as the CNF/Na-ALG HF were seeded on a 96-well multi-well plate at 2 × 3¹⁰/well and kept in 200 µl of D-MEM containing 10% FBS and 50 µg/ml kanamycin at 37°C for three days. After replacing with the medium containing the CNF/Na-ALG or the control medium, HF were further incubated at 37°C for one to seven days. After incubation, growth of the cells was evaluated with MTS assays. For MTS assays, replacement was made with 100 µl Eagle's minimal essential medium (with no Phenol Red) containing 333 µg/ml MTS and 25 µM phenazine methosulfate. After incubating at 37°C for two hours, absorbance of each well was measured at 485 nm. Two hours after the MTS treatment, cell growth was calculated from A₄₈₅ values. Relative cell growth (RCG, %) was calculated by dividing the average value for the treated cells by the average value for the untreated cells (cultured with 5% FBS). RCG of the cells incubated with the medium containing CNF and/or Na-ALG was 100% ± 5% one and two days after dosing. Even seven days after dosing, RCG was more than 85%.

Eight-week old, male Jcl:SD rats were purchased from Clea Japan. These rats were isolated for six days and acclimatized. One of them received no dosing, while others were orally dosed singly using nasogastric tubes. Dosages were 10 mg of CNF and 200 mg of Na-ALG per kg of body weight. Macroscopic observations and body weights were recorded once a week. At the end of observation, the rats were fasted for 16 hours and anesthetized, before sampling blood and serum. Also, in order to observe alteration of the glandular stomach, necropsy was performed. One to two weeks after dosing, white blood cells (WBC) increased from 5,100 in the untreated rats to 7,700 and 8,100 in the rats dosed with the medium control. Similar increases were observed for the rats dosed with the CNF/Na-ALG colloid (WBC increased from 5,100 to 7,900 and 8,400). β-globulin fraction increased from 16.2% in the untreated rat to 21.7% and 21.5% in the rats treated with Na-ALG and CNF/Na-ALG One week after dosing, deep folds were observed on the glandular stomach of each rat dosed with Na-ALG and CNF/Na-ALG. No changes were observed for other parameters (deviation < 10%). In three weeks after dosing, all hematological and biochemical data returned to the normal values.

Both the in vitro and in vivo experiments show that aqueous solutions of sodium alginate and CNF/Na-ALG colloid have little or no adverse effects on the cells and animals studied in the experiments.

### Large scale production of Ba²⁺-alginic acid-coated microsomes containing highly dispersed CNF

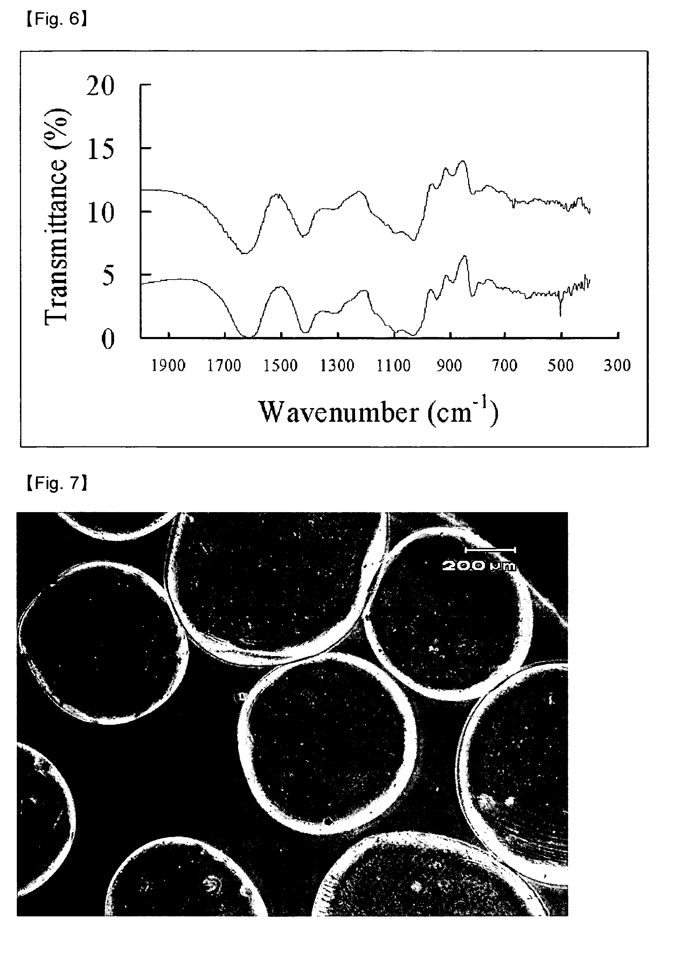

Using a solution of CNF/Na-ALG colloid, Ba²⁺-alginic acid-coated microsomes containing highly dispersed CNF were produced by encapsulation. An encapsulating apparatus, Encapsulator Research IER-20, was purchased from InoTech. (i) An aqueous solution containing 20 mg/ml of only sodium alginate, (ii) an aqueous solution containing 0.5 mg/ml of CNF highly dispersed in 20 mg/ml Na-ALG solution, and (iii) an aqueous solution containing 0.5 mg/ml of CNF easily dispersed (mixed for five minutes by ultrasonification) in 20 mg/ml Na-ALG solution were prepared and used for production of reference microsomes (containing no CNF), microsomes containing highly dispersed CNF and microsomes containing low-dispersion CNF, respectively. BaCl₂ was dissolved in deionized water to a concentration of 100 mM, to thereby prepare a gelatinizing solution (also known as curing solution). Using this encapsulation technique, microsomes having adjustable diameters were mass-produced. Using a nozzle having a diameter of 300 micrometers to activate electro-static charge tension with 1100 V at an oscillation frequency of 900 Hz, microsomes having a diameter in the range of from 400 to 800 micrometers were obtained. Typical microscopic observation of microsomes containing highly dispersed CNF is shown in Fig. 7. Using this encapsulation, microsomes can be produced in kilogram unit in a few hours. Ba²⁺ ions are gelatinizing ions stronger than Ca²⁺ ions (P. Grohn, Exp. Clin. Endocrinol., 102, 380 (1994)) and were used throughout this experiment. The Ba²⁺-alginic acid-coated CNF microsomes are chemically and mechanically stable and much heavier than water (easy to separate from aqueous phase).

### CNF/Ba²⁺-alginic acid microsomes as adsorbent for removing ethidium ions from aqueous solution

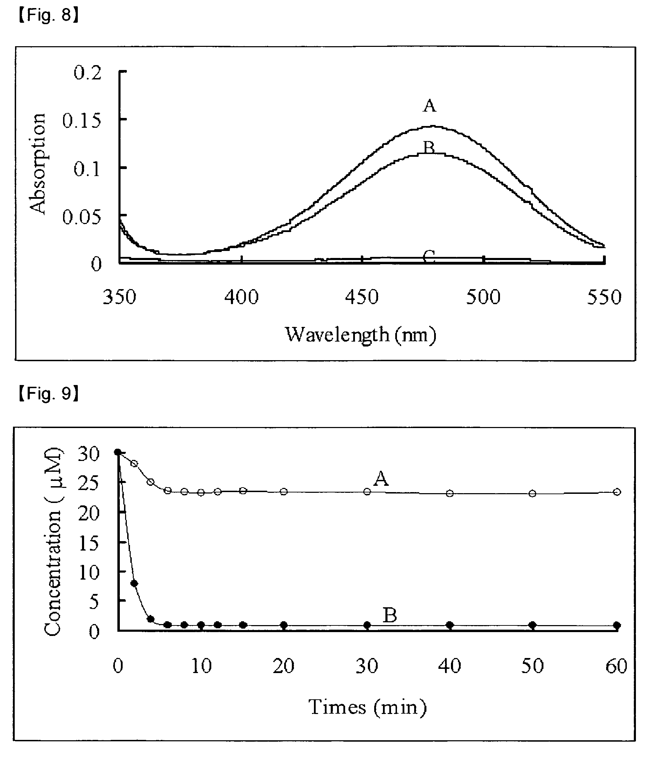

Reference microsomes (containing no CNF) and microsomes containing CNF are thoroughly washed with deionized water using a sieve. Mesh size of the sieve was 100 micrometers. Two, cone-bottomed 45 ml tubes containing 10 ml of the reference microsomes and the microsomes containing highly dispersed CNF respectively were supported vertically with a tube stand. Next, 15 ml of a solution of 30 µM ethidium bromide in water was added to each tube. Five minutes after the ethidium solution was mixed with the microsomes, a solution of aggregation phase was collected and measurement was made with a UV-vis spectrometer (Jasco UV-550). Fig. 8 shows the results. Absorption value of the solution of 30 µM ethidium bromide in water at 480 nm was found 0.142. When this solution was mixed with the microsomes containing highly dispersed CNF, however, it decreased to 4.9 × 10⁻³_{.}

Fig. 9 shows the variation in concentration of ethidium ions in the aqueous solution as a function of time of contact (15 ml of the solution of 30 µM ethidium bromide in water was mixed with 10 ml of the microsomes containing highly dispersed CNF). As the time of contact increases, the concentration of ethidium ions in the aqueous solution rapidly decreased. It reached 0.98 µM approximately eight minutes after the solution had been mixed with the CNF/Ba²⁺-alginic acid microsomes, and showed no changes thereafter. The performance of 10 ml of microsomes obtained by using an aqueous CNF-Na-ALG colloidal solution containing 0.5 mg/ml CNF and 20 mg/ml Na-ALG as a gelling solution to remove ethidium ions from an aqueous solution was found 0.43 µmol/ml. This value was calculated approximately ten minutes after the aqueous ethidium bromide solution had been mixed with the CNF/Ba²⁺-alginic acid microsomes, by dividing the amount of ethidium ions removed by the microsomes by the amount of microsomes used as an adsorbent.

Also, the same experiment was performed by using, as an adsorbent, microsomes coated with Ba²⁺-alginic acid containing highly dispersed multi-walled carbon nanotubes (MWCNT). MWCNT (20 to 40 nm in diameter, 5 to 20 µm in length and > 80% in purity, as recommended by manufacturer) were purchased from Nano Lab and used as received. The process for preparing aqueous MWCNT/ Na-ALG colloid and MWCNT/Ba²⁺-alginic acid microsomes and the method for testing the performance to remove ethidium ions were the same as those for CNF. The performance of 10 ml of MWCNT/Ba²⁺-ALG microsomes obtained by using an aqueous solution containing 0.5 mg/ml MWCNF and 20 mg/ml Na-ALG as a gelling solution to adsorb ethidium ions was found 0.42 µmol/ml. This performance value is, in fact, substantially the same as the performance value of CNT/Ba²⁺-ALG microsomes.

### Example 2

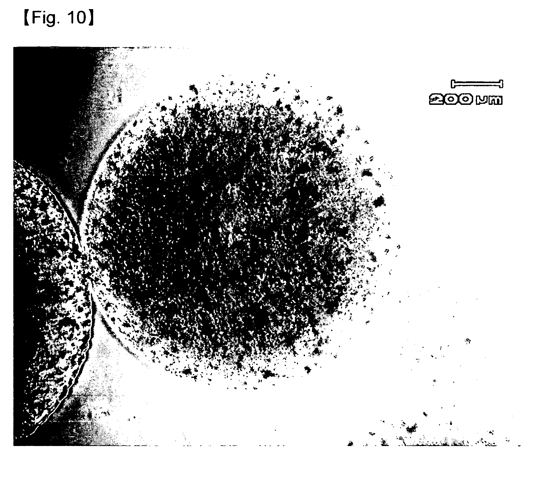

Sodium alginate (Na-ALG) for this example was purchased from Wako Pure Chemicals Industries (Osaka). MWCNT (CVD product: 15 nm ± 5 nm in outer diameter, 1 to 5 µm in length and > 90% in purity, as published by manufacturer) were purchased from Nano Lab (Massachusetts, USA) and used as received. Na-ALG was dissolved in deionized water to produce an aqueous Na-ALG solution at a concentration of 15 mg/ml. MWCNT were dispersed in this aqueous Na-ALG solution at a concentration of 1.0 mg/ml by combination of high shear mixing and ultrasonification. A semiautomatic apparatus IER-20^{®} system (Inotech, Dottikon, Switzerland) was used for encapsulation of the MWCNT to form Ba²⁺-alginic acid-coated microbeads. The IER-20^{®} system consisted of an injector, an injector pump, a pulsing chamber, an oscillator system, a nozzle, electrodes, an ultrasonification oscillator system as well as an electrostatic supply system and O-ring-shaped electrodes. Using the injector pump, an aqueous Na-ALG/MWCNT colloidal solution was forced into the pulsing chamber. Then, this aqueous colloidal solution was passed through a precision-bored sapphire nozzle (300 µm in diameter) to allow it to separate into droplets having an equal size when being ejected out of the nozzle. These droplets were passed to the electrostatic field between the nozzle and the ring electrodes to charge the surface of the droplets with static electricity. When the droplets fell into a curing solution (solution containing a crosslinking agent), that is, an aqueous barium chloride solution (Ba²⁺ ions 100 mM), electrostatic repulsion dispersed the droplets. Further information on operating principles of the IER-20^{®} system can be found in related references (H. Brandenberger, D. Nussli, V. Piech, F. Widmer, J. Electrostatics, 1999, 45, 227 and D. Serp, E. Cantana, C. Heinzen, U. von Stockar, 1. W. Marson, Biotech. & Bioeng., 2000, 70, 41). The Ba²⁺-ALG/MWCNT composite beads obtained were rinsed thoroughly using deionized water using a sieve of 100 µm mesh size. Fig. 10 shows typical microscopic observation of the Ba²⁺-ALG/MWCNT composite beads. Beads having a diameter in the range of from 400 to 900 micrometers were produced. The size of the beads can be adjusted by altering the ultrasonic oscillation frequency, electro-static charge tension, nozzle diameter and flowrate of the aqueous Na-ALG/MWCNT colloidal solution. Using this encapsulation, Ba²⁺-ALG/MWCNT composite beads can be produced in kilogram amounts in a few hours. Ba²⁺ ions are coherent ions stronger than Ca²⁺ ions (P. Grohn, Exp. Clin. Endocrinol., 1994, 102, 380) and were therefore used as curing ions in this study. The Ba²⁺-ALG/MWCNT composite microbeads are chemically and mechanically stable, and much heavier than water. They are therefore easy to separate from aqueous phase.

An open-type glass column (20 cm in length, 5.0 cm in diameter) was filled with approximately 200 ml of Ba²⁺-ALG/MWCNT composite microbeads. Two liters of an aqueous solution containing three model compounds, namely, dibenzo-p-dioxine (DD), dibenzofuran (DF) and biphenyl (BP) respectively, each at a concentration of 2.0 µM were pumped by a peristaltic pump into the column at a fixed flowrate of 10 ml/min. Using GC-MS, concentrations of the model compounds in the eluate were measured. Targeted species, namely DD, DF and BP were extracted with 10 ml of hexane from 50 ml of the eluate. The hexane phase was separated from the aqueous phase and reduced to 1.0 ml before analyzing it by GC-MS (Shimazu GC-MS-QP 5050A). The aqueous solution containing the model compounds each at 2.0 µM was prepared by diluting stock solutions of DD, DF and BP (each at 2.0 mM, dissolved in methanol) with deionized water.

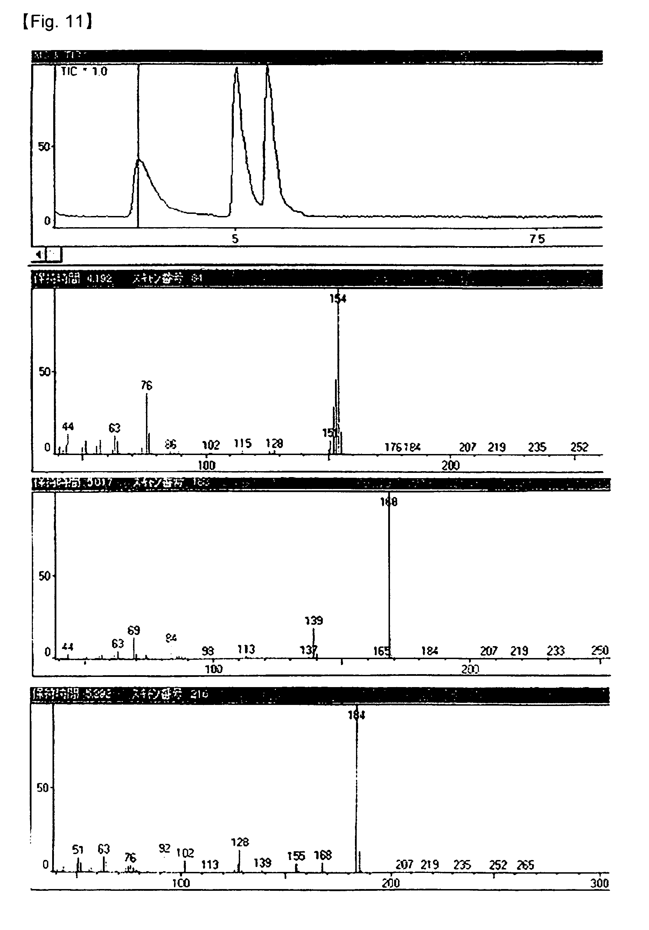

Concentrations of DD, DF and BP in the eluate after being passed once through the column were found 0.014 µM, 0.015 µM and 0.018 µM, respectively. When this eluate was once again passed through the column, these model compounds were no longer detected, with their concentrations being below the detection power of this GC-MS system. The polluted water was once passed before eluting the model compounds through the column using 40 ml of hexane. The hexane phase was separated from the aqueous phase and directly analyzed using the same conditions for GC-MS analysis. Concentrations of DD, DF and BP in the hexane sample were found 99.12 µM, 99.03 µM and 98.86 µM, respectively. Fig. 11 shows typical total ion chromatograms (TIC) and mass spectra corresponding to each peak. First, BP was eluted from the GC column, followed by eluting DF and then DD. Removal efficiencies of DD, DF and BP when they were once passed through the remover column were 99.12%, 99.03% and 98.89%, respectively. These values were calculated by dividing the total amount of the model compounds retained in the column by the total amount of the model compounds supplied to the column. Eluate from the first circulation may be returned to the remover column for a second treatment to obtain higher removal efficiency.

Also, experiments were conducted using a remover column containing only matrix microbeads, that is, Ba²⁺-alginic acid microbeads not containing MWCNT. At the first circulation, removal efficiencies of DD and DF were found 18.3% and removal efficiency of BP was found 18.4%. Removal efficiencies of the second circulation were substantially the same as those of the first circulation. These adsorption experiment data suggest that removal of targeted compounds be largely by virtue of the presence of MWCNT. High affinity bond between the targeted compounds and MWCNT is attributable to the unique structure and electronic properties of carbon nanotubes. The hexagonal arrangement of carbon atoms in a graphene sheet of MWCNT strongly interacts with an aromatic bond of a model compound. As a result of this interaction, the targeted species, namely, DD, DF and BP were efficiently removed by the MWCNT of the Ba²⁺-alginic acid/MWCNT composite adsorbent. In addition, the Ba²⁺-alginic acid/MWCNT composite adsorbent may be reused by regenerating the beads with hexane.

### Example 3

### Production Example 1: Example of production of CNT dispersion liquid 1 (aqueous dispersion liquid using zwitterionic surface active agent/ionic polymer as a dispersant)

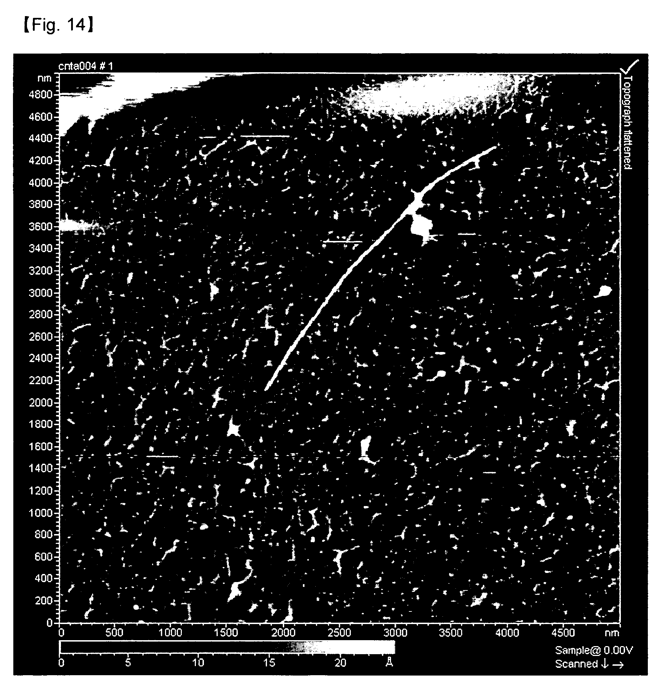

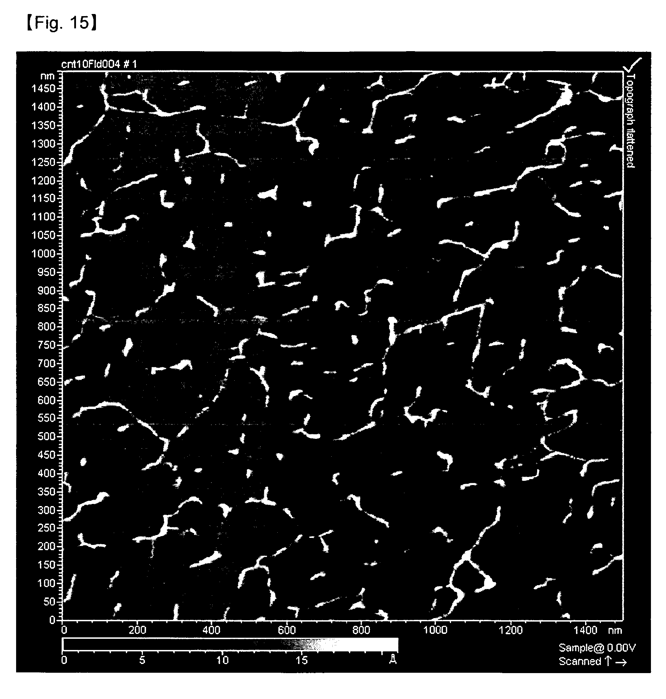

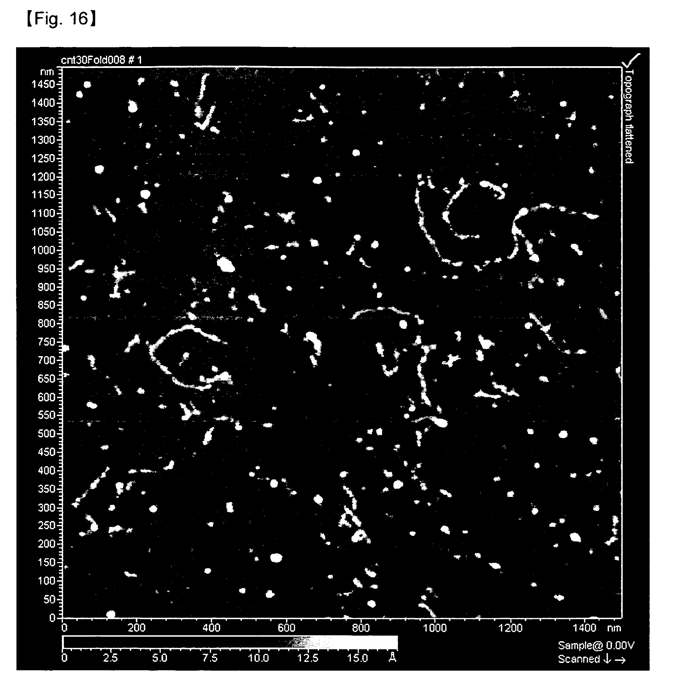

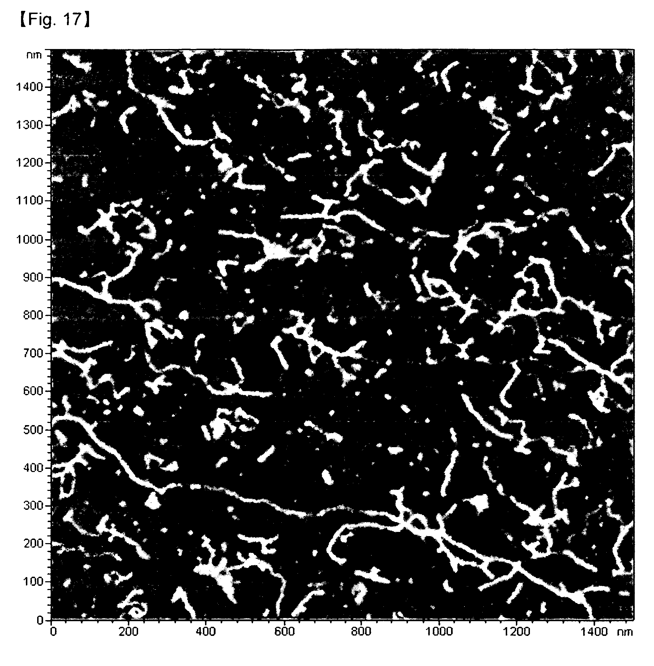

A blend of 100 mg of single-walled carbon nanotubes (SWCNT, manufactured by Nano Lab), 1.68 g of a surface active agent (N-octadecyl-N,N'-dimethyl-3-amino-1-propanesulfonate, Zwitter-3-18, manufactured by Fluka) and 5 ml of glycerol (manufactured by Wako Pure Chemicals) was milled using a mortar for approximately two hours and then, with 5 ml of deionized water added, was further milled for 30 minutes. To this colloidal mixture, 0.6 g of NaI (manufactured by Wako Pure Chemicals) and 1.0 g of κ-carrageenan (manufactured by Wako Pure Chemicals) were added and it was then milled for another 30 minutes. A solution of 10% methanol in water was added until the mixture amounted to 100 ml. It was placed on an ice tray and mixed with a homogenizer for approximately one hour, before subjecting it to centrifugation to remove insolubles. Dispersity and stability were evaluated by methods as already reported (for example, Environ. Sci. Technol., 38, 6890-6896, 2004). In this production example, I⁻ functions to detach each surface active agent-applied SWCNT in the coagulation state and the carrageenan functions to prevent the detached, surface active agent-applied SWCNT from recombining. Such as those functioning as dispersing aids are also included in the concept of "dispersant" herein. Figs. 14 to 16 show AFM photographs (scanning microscope manufactured by Molecular Imaging, Yamato Scientific) of SWCNT at concentrations of 0.25, 0.25/10 and 0.25/30 mg/ml produced in accordance with this production example. These photographs show that the dispersant according to this production example has extremely high dispersity. Also, Fig. 17 is an AFM photograph in the case where multi-walled carbon nanotubes (MWCNT, manufactured by Nano Lab) were used instead of SWCNT (concentration of MWCNT at 10 µg/ml). This photograph shows that the dispersant according to this production example has high dispersity also to the multi-walled carbon nanotubes.

### Production Example 2: Example of production of CNT dispersion liquid 2 (aqueous dispersion liquid to which silicone-based surface active agent is further added)

To 100 ml of the dispersion liquid obtained in Production Example 1, 50 ml of a silicone-based foam stabilizer used during fabrication of foamed polyurethane was added and shaken with a shaker for approximately one hour. An SWCNT solution having high dispersity and stability was fabricated.

### Production Example 3: Example of production of CNT dispersion liquid 3 (aqueous dispersion liquid using cyclodextrin polymer as dispersant)

A blend of 10 mg of single-walled carbon nanotubes (SWCNT, manufactured by Nano Lab), 0.1 mg of C60 fullerene (manufactured by Tokyo Chemical Industry), 500 mg of CD-polymer (manufactured by Sigma) and 5 ml of glycerol (manufactured by Wako Pure Chemicals) was milled using a mortar for approximately two hours and then, with 5 ml of deionized water added, was further milled for 30 minutes. To this colloidal mixture, 0.4 g of CaCl₂ (manufactured by Wako Pure Chemicals) was added and it was then milled for another 30 minutes. Deionized water was added until the mixture amounted to 100 ml. It was placed on an ice tray and mixed with a homogenizer for approximately one hour, before subjecting it to centrifugation to remove insolubles. Dispersity and stability were evaluated by the methods described above. In this production example, Ca²⁺ functions to attach to the SWCNT/fullerene/CD composite to prevent the composite from coagulating.

### Production Example 4: Example of production of CNT dispersion liquid 4 (non-aqueous dispersion liquid using low molecular compound (lipid) as dispersant)

100 mg of lecithin (yoke-derived lecithin, Wako Pure Chemicals) was dissolved into 20 ml of chloroform, placed in an eggplant-shaped flask and then evaporated until the chloroform was completely removed. Next, 10 ml of the dispersion liquid obtained in Production Example 1 to which sodium chloride was added to a concentration of 10 mM was added and a thin film of lecithin adhering to the flask was suspended with a vortex mixer. Next, the suspension was freeze-dried and then 10 ml of deionized water and 10 ml of hexane were added. After full oscillation and mixing, the hexane layer (lecithin/carbon nanotube composite) was recovered in a separatory funnel. In this production example, sodium chloride functions to aid micelle formation.

### Production Example 5: Example of production of CNT dispersion liquid 5 (non-aqueous dispersion liquid using paraffin as dispersant)

To the dispersant obtained in Production Example 1, ether of 0.2% paraffin (melting point of the paraffin: 55 to 60°C) was added at 1:1 and shaken with a shaker for approximately two hours. The paraffin layer (paraffin/carbon nanotube composite) was fractionated, recovered and placed in an eggplant-shaped flask and then evaporated until the ether was completely removed. A paraffin/carbon nanotube composite (solid at room temperature) was recovered.

### Production Example 6: Example of production of CNT dispersion liquid 6 (non-aqueous dispersion liquid using high molecular polymer as dispersant)

A blend of 100 mg of single-walled carbon nanotubes (SWCNT, manufactured by Nano Lab), 1.68 g of a surface active agent (N-octadecyl-N,N'-dimethyl-3-amino-1-propanesulfonate, Zwitter-3-18, manufactured by Fluka) and 5 ml of glycerol (manufactured by Wako Pure Chemicals) was milled using a mortar for approximately two hours and then, with 0.6 g of NaI (manufactured by Wako Pure Chemicals) added, was further milled for 30 minutes. Then, 50 ml of 1-methyl-pyrollidone solution, in which 1 g of polysulfone (Aldrich, MO 26000) had been dissolved, was added, followed by milling and mixing with a mortar for approximately two hours before subjecting it to centrifugation to remove insolubles.

### Production Example 7: Example of production of CNT dispersion liquid 7 (non-aqueous dispersion liquid using fullerene as dispersant)

0.5 g of C60 fullerene (manufactured by Tokyo Chemical Industry) was dissolved in 50 ml of toluene and then 10 mg of single-walled carbon nanotubes (SWCNT, manufactured by Nano Lab) were added. Using a mortar, milling and mixing were continued for approximately two hours to obtain the title dispersions.

### Production Example 8: Example of production of CNT dispersed aramid fibers using mediator substance

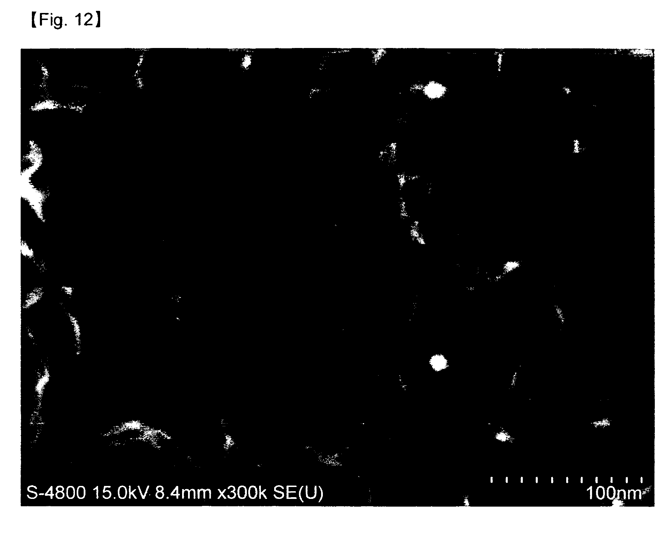

To 100 ml of the dispersion liquid obtained in Production Example 1, 5 g of ultrafine polyester fibers (10 µm in diameter, manufactured by Unitika) was added and sufficiently immersed therein. It was then placed on a tray filled with ice and heated in a microwave oven until the ice scarcely thawed. In this process, the dispersant moved to the aqueous phase and the SWCNT moved to the ultrafine fibers, that is, a hydrophobic phase. Next, the ultrafine fibers carrying SWCNT were sufficiently washed with deionized water and then treated with a solution 5% hydrogen peroxide in water to remove the remaining dispersant. Using the fully dried SWCNT/fiber composite, aramid fibers fused with highly dispersed carbon nanotubes were fabricated in the following procedures. For process for fabrication, first, to 100 g of polyparaphenyleneterephtalamide solution (PPTA, approximately 26%) dissolved in concentrated sulfuric acid, approximately 1 g of SWCNT/ultrafine fiber composite was added and agitated until the ultrafine fibers were completely decomposed. Fig. 12 is an SEM photograph showing the appearance. Next, according to liquid crystal spinning method, aramid threads fused with SWCNT were fabricated from PPTA/SWCNT solution. Here, the results of electrical conductivity testing on the obtained aramid threads confirmed electrical conductivity.

### Production Example 9: Example of production of CNT-dispersed hydroapatite using mediator substance

Approximately 1 g of the SWCNT/ultrafine fibers obtained in Production Example 8 was immersed in 500 ml of an aqueous solution containing 3.0 mM CaHPO₄•2H₂O and 7.0 mM Ca(OH)₂ at room temperature for seven days and was treated under 120 MPa at 1,000°C to fabricate hydroapatite fused with SWCNT.

### Production Example 10: Example of production of CNT-dispersed foamed polyurethane using CNT dispersion liquid

A catalytic amount of amine catalyst (triethylenediamine) and water were added to and mixed with the CNT dispersion liquid obtained in Production Example 2 (dispersion liquid:water = 1:4 by volume) and then the solution and toluenediisocyanate were mixed at a volume ratio of 1:4 to obtain CNT-dispersed foamed urethane.

### Production Example 11: Example of production of CNT-dispersed dialysis membrane using CNT dispersion liquid

The CNT dispersion liquid obtained in Production Example 6 was cast on a Teflon plate and 1-methyl-2-pyrollidone was slowly removed to fabricate a dialysis membrane, inside of which carbon nanotubes are dispersed.

### Production Example 12: Example of production of CNT-dispersed heat-resistant filter using CNT dispersion liquid

The dispersion liquid obtained in Production Example 1 was added dropwise to a commercially available aluminum filter (Anodisk membrane, scattered with pores 20 to 500 nanometers in width) and another aluminum filter was used to intercalate it before sufficiently washing with 10% ethanol/water and 5% hydrogen peroxide in water. Then, heat was applied for adhesion to fabricate heat-resistant nanofilters having carbon nanotubes as the adsorptive side.

### Production Example 13: Example of production of CNT-dispersed electrically conductive filter 1 using CNT dispersion liquid

A foamed polyurethane (sponge) was uniformly impregnated with the dispersion liquid obtained in Production Example 1, before sufficiently washing with 10% ethanol/water and 5% hydrogen peroxide in water and drying. The sponge was impregnated with in 100 mM silver nitrate mercury ions and then reduced with box electrodes to fabricate a silver flock using the sponge as a template. Then, the sponge was thermally decomposed to fabricate a CNT-dispersed, electrically conductive porous filter. The results of electrical conductivity testing on the obtained filter confirmed electrical conductivity.

### Production Example 14: Example of production of CNT dispersed electrically conductive filter 2 using CNT dispersion liquid

To 50 ml of the dispersion liquid obtained in Production Example 1, sodium alginate (manufactured by Wako Pure Chemicals) was added to a content of 1.2% by weight, followed by casting and drying at room temperature to obtain a film. Next, a solution of 1 M silver nitrate in water was added to the film to thereby obtain a film-like gel. Next, the gel was reduced with 1 M ascorbic acid to thereby obtain a film-like silver dispersed with SWCNT. Here, the results of electrical conductivity testing on the obtained filter confirmed electrical conductivity.

### Production Example 15: Example of production of fibrous filter in dry system using mediator

1 g of polyester fibers (manufactured by Unitika) was mixed with 1 g of the SWNT/ultrafine fibers obtained in Production Example 8, before pressing at 150°C to obtain a fibrous filter. In order to confirm the performance of this filter, silicone oil was adsorbed. The results confirmed that the filter had power of adsorbing 30% by weight of oil in relation to the weight of the filter.

## Claims

1. A fine carbon dispersion object produced by using a fine carbon-dispersed liquid medium which contains nano- to micro-sized fine carbons and a dispersant for the fine carbons.

2. The fine carbon dispersion object according to Claim 1, which is of the surface dispersion type wherein the fine carbons are dispersed on the surface of an object or of the internal dispersion type wherein the fine carbons are dispersed on the inside of an object.

3. The fine carbon dispersion object according to Claim 2, wherein the fine carbon dispersion object of the internal dispersion type is a gel or a dried product thereof obtained by gelling the fine carbon-dispersed liquid medium or a dried product thereof.

4. The fine carbon dispersion object according to Claim 3, which adopts a double structure made of inner and outer layers, wherein the inner layer is the carbon-dispersed liquid medium and the outer layer is a gelled product of the fine carbon-dispersed liquid medium.

5. The fine carbon dispersion object according to Claim 2, wherein the fine carbon dispersion object of the internal dispersion type is produced by dispersing raw material monomers in the fine carbon-dispersed liquid medium, followed by polymerizing the raw material monomers and removing the liquid medium.

6. The fine carbon dispersion object according to Claim 2, wherein the fine carbon dispersion object of the internal dispersion type is produced by dispersing a raw material polymer in the fine carbon-dispersed liquid medium, followed by removing the liquid medium.

7. The fine carbon dispersion object according to Claim 2, wherein the fine carbon dispersion object of the surface dispersion type is produced by immersing a raw material in the fine carbon-dispersed liquid medium and optionally raveling out the raw material, followed by removing the liquid medium.

8. The fine carbon dispersion object according to Claim 1 or 2, wherein the object composing the fine carbon dispersion object is made of a material capable of liberating, under predetermined conditions, the fine carbons dispersed on the surface and/or on the inside.

9. The fine carbon dispersion object according to Claim 8, which is produced by adding the object to the fine carbon-dispersed liquid medium and then performing induced phase transfer treatment in which the fine carbons are transferred from the liquid medium side to the object side.

10. The fine carbon dispersion object according to Claim 9, wherein the induced phase transfer treatment is electromagnetic wave treatment or ultrasonification.

11. The fine carbon dispersion object according to any one of Claims 8 to 10, wherein the object is an ultrafine fiber or a higher paraffin.

12. The fine carbon dispersion object according to any one of Claims 8 to 11, which is a mediator material for dispersing the fine carbons in a product during production of the product.

13. A process for producing a fine carbon dispersion object in which fine carbons are dispersed within a gel or a dried product thereof, comprising the step of crosslinking a crosslinkable component contained in a fine carbon-dispersed liquid medium or a dried product thereof containing nano- to micro-sized fine carbons and a dispersant for the fine carbons.

14. The process according to Claim 13, wherein the crosslinkable component is a dispersant.

15. A process for producing a fine carbon dispersion object in which fine carbons are dispersed within a gel, which adopts a double structure made of inner and outer layers, comprising the step of adding a fine carbon-dispersed liquid medium containing nano- to micro-sized fine carbons and a dispersant for the fine carbons and containing a crosslinkable component to a liquid medium containing a gelling agent capable of gelling the component, wherein the inner layer is the fine carbon-dispersed liquid medium and the outer layer is a gelled product of the fine carbon-dispersed liquid medium.

16. A process for producing a fine carbon dispersion object in which fine carbons are dispersed within an object, comprising a step of dispersing object raw material monomers in a fine carbon-dispersed liquid medium containing nano- to micro-sized fine carbons and a dispersant for the fine carbons, a step of polymerizing the object raw material monomers and a step of removing the liquid medium.

17. A process for producing a fine carbon dispersion object in which fine carbons are dispersed within an object, comprising a step of dispersing an object raw material polymer in a fine carbon-dispersed liquid medium containing nano- to micro-sized fine carbons and a dispersant for the fine carbons and a step of removing the liquid medium.

18. A process for producing a fine carbon dispersion object in which fine carbons are dispersed on the surface of an object, comprising a step of immersing the object in a fine carbon-dispersed liquid medium containing nano- to micro-sized fine carbons and a dispersant for the fine carbons and a step of removing the liquid medium.

19. The process according to Claim 18, which further includes a step of induced phase transfer treatment in which the fine carbons are transferred from the liquid medium side to the object side.

20. An adsorbent material comprising the fine carbon dispersion object according to any one of Claims 1 to 12.

21. The adsorbent material according to Claim 20, which is used for adsorbing contaminants and harmful substances in liquids and gases.

22. The adsorbent material according to Claim 20 or 21, which is used for filtering systems for industrial and drinking waters, demineralizers, a variety of chromatography, systems for adsorbing substances harmful to human beings such as carcinogens, air cleaners, exhaust gas cleaners and electrically conductive materials.

23. An electrically conductive material comprising the fine carbon dispersion object according to any one of Claims 1 to 12.

24. A filtering system for industrial and drinking waters, a demineralizer, a variety of chromatography, a system for adsorbing substances harmful to human beings such as carcinogens, an air cleaner, an exhaust gas cleaner or an electrical appliance, comprising the adsorbent material according to any one of Claims 20 to 22 or the electrically conductive material according to Claim 23.

25. A process for producing a product in which fine carbons are dispersed, comprising the step of adding the fine carbon dispersion object according to any one of Claims 1 to 12 in a dry or wet manner to a system in which the product or a raw material for the product is present.

26. A process for producing a product in which fine carbons are dispersed, comprising the step of adding the fine carbons according to any one of Claims 8 to 12 to a system in which the product or a raw material for the product is present, the system sufficing the predetermined requirements of Claim 8.

27. The process according to Claim 26, wherein the product is an aramid fiber and the object is a material soluble in concentrated sulfuric acid.

28. A non-aqueous dispersion liquid of carbon nanotubes in which a fullerene is used as a dispersant for the carbon nanotubes.

29. An aqueous dispersion liquid of carbon nanotubes in which a cyclodextrin and a fullerene are used in as dispersants for the carbon nanotubes.

30. A dispersion liquid for producing fine carbons in which the fine carbons are dispersed on the surface and/or on the inside, which are a liquid medium in which the fine carbons are dispersed by a dispersant for nano- to micro-sized fine carbons.

31. The dispersion liquid according to Claim 30, wherein the liquid medium is a non-aqueous liquid medium, the fine carbons are carbon nanotubes and the dispersant is a fullerene.

32. The dispersion liquid according to Claim 30, wherein the liquid medium is an aqueous liquid medium, the fine carbons are carbon nanotubes and the dispersant is a surface active agent capable of forming globular micelles having a diameter of from 50 to 2,000 nm in the liquid medium or a water-soluble macromolecule having a weight average molecular weight of from 10,000 to 50,000,000.

33. The dispersion liquid according to Claim 30, wherein the liquid medium is an aqueous liquid medium, the fine carbons are carbon nanotubes and the dispersant is a cyclodextrin and fullerene.

34. A fine carbon-dispersed liquid medium containing nano- to micro-sized fine carbons and a dispersant for the fine carbons, including as one dispersant a substance for promoting and/or maintaining unbundled state of the fine carbons.

35. The fine carbon-dispersed liquid medium according to Claim 34, which is used for producing fine carbons, wherein the fine carbons are dispersed on the surface and/or on the inside.

36. A dispersant for fine carbons, having attachment sites to nano- to micro-sized fine carbons and groups for inducing electrical attraction, wherein one of the groups for inducing electrical attraction of the dispersant attached to one of the fine carbons attracts another group for inducing electrical attraction of the dispersant attached to another fine carbon through electrical attraction generated between them to promote unbundled state of the fine carbons.

37. The dispersant for fine carbons according to Claim 36, having anionic and cationic groups, wherein an anionic group and a cationic group attached to one of the fine carbons attract another cationic group and another anionic group attached to another fine carbon respectively through electrical attraction generated between them to promote unbundled state of the fine carbons.

38. The dispersant according to Claim 37, which is an zwitterionic surface active agent.

39. A fine carbon dispersion object produced by using a fine carbon-dispersed liquid medium containing nano- to micro-sized fine carbons and the dispersant according to any one of Claims 36 to 38.
